# EUROPEAN PATENT SPECIFICATION

(11) **EP 2 905 981 B1**
(45) Date of publication and mention of the grant of the patent: **15.05.2019**
(21) Application number: 13844494.8
(22) Date of filing: 20.09.2013
(51) Int. Cl.: H04W 8/24, H04W 8/06, H04W 92/14, H04W 24/10, H04W 64/00

(54) **RADIO ACCESS NETWORK APPARATUS, CORE NETWORK APPARATUS AND METHODS OF THESE**
FUNKZUGANGSNETZVORRICHTUNG, KERNNETZVORRICHTUNG UND VERFAHREN DAFÜR
APPAREIL DE RÉSEAU D'ACCÈS RADIO, APPAREIL DE COEUR DE RÉSEAU ET LEURS PROCÉDÉS

(30) Priority: 04.10.2012 JP 2012222011
(43) Date of publication of application: 12.08.2015
(73) Proprietor: NEC Corporation, Tokyo 108-8001 (JP)
(72) Inventor: IWAI, Takanori, Tokyo 108-8001 (JP); TAMURA, Toshiyuki, Tokyo 108-8001 (JP); HAYASHI, Sadafuku, Tokyo 108-8001 (JP); ZEMBUTSU, Hajime, Tokyo 108-8001 (JP); FUTAKI, Hisashi, Tokyo 108-8001 (JP); SHIMIZU, Masayoshi, Tokyo 108-8001 (JP)
(74) Representative: Vossius & Partner Patentanwälte Rechtsanwälte mbB
(86) International application number: PCT/JP2013/005582
(87) International publication number: WO 2014/054237

(56) References cited:
- JP-A- 2007 214 711
- JP-A- 2010 288 029
- JP-A- 2010 288 278
- JP-A- 2010 527 538
- JP-A- 2011 530 856
- US-A1- 2010 272 050
- US-A1- 2011 183 662
- 3GPP TS 36.413 V11.1.0 (2012-09): "3GPP TS 36.413 V11.1.0 (2012-09); 3rd Generation Partnership Project; Technical Specification Group Radio Access Network; Evolved Universal Terrestrial Radio Access Network (E-UTRAN); S1 Application Protocol (S1AP) (Release 11)", 3GPP STANDARD; 3GPP TS 36.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V11.1.0, 21 September 2012 (2012-09-21), pages 1-262, XP050649760, [retrieved on 2012-09-21]

## Description

### Technical Field

The present application relates to a mobile communication system, and in particular, to management of terminal information used in a radio access network.

### Background Art

A multiple access mobile communication system enables a plurality of wireless terminals to perform wireless communication substantially simultaneously, by sharing radio resources including at least one of time, frequency, and transmission power among the plurality of mobile terminals. Typical examples of multiple access schemes include Time Division Multiple Access (TDMA), Frequency Division Multiple Access (FDMA), Code Division Multiple Access (CDMA), or Orthogonal Frequency Division Multiple Access (OFDMA) and any combination thereof. Unless otherwise explained, the term "mobile communication system" used in this specification refers to a multiple access mobile communication system.

A mobile communication system includes a mobile terminal and a network. The network includes a radio access network (RAN) and a mobile core network (MCN). The mobile terminal communicates with an external network (e.g., the Internet, a packet data network, or a private enterprise network) through the RAN and the MCN. The mobile communication system is, for example, a 3rd Generation Partnership Project (3GPP) Universal Mobile Telecommunications System (UMTS) or an Evolved Packet System (EPS). The RAN is, for example, a Universal Terrestrial Radio Access Network (UTRAN) or an Evolved UTRAN (E-UTRAN). The MCN is, for example, a General Packet Radio Service (GPRS) packet core or an Evolved Packet Core (EPC).

Patent literature 1 discloses measuring, by a mobile terminal or a network (i.e., a base station or a gateway), duration time of an inactive state during which the mobile terminal does not perform communication, and causing the mobile terminal to make a transition to a sleep mode when the duration time exceeds a predetermined expiration period. Patent literature 1 further discloses measuring, by a mobile terminal or a network (i.e., a base station or a gateway), an occurrence rate of communication of the mobile terminal, and changing the expiration period of the timer regarding the sleep mode transition according to the occurrence rate of communication of the mobile terminal. Patent literature 1 further discloses changing the expiration period of the timer regarding the sleep mode transition based on remaining battery power of the mobile terminal.

Patent literature 2 and 3 disclose supplying, from an MCN to a control apparatus (e.g., a base station) in a RAN, a control policy used to control a state transition of a mobile terminal between a CONNECTED state and an IDLE state. The control policy includes, for example, designation of a time interval (IDLE transition interval) until the time that the mobile terminal makes a transition from the CONNECTED state to the IDLE state. The control policy is managed, for example, by a mobility management node (e.g., a Mobility Management Entity (MME) or a Serving GPRS Support Node (SGSN)) or a subscriber server (e.g., a Home Subscriber Server (HSS)).

Non-patent literature 1 and 2 disclose that subscriber data managed by an HSS in a 3GPP mobile communication system includes configuration data of an UE inactivity timer. The UE inactivity timer measures duration time of an inactive state during which user data regarding a mobile terminal is neither transmitted nor received. The UE inactivity timer is started by a base station and is used to determine to change the state of the mobile terminal from a CONNECTED state to an IDLE state. The configuration data of the UE inactivity timer held by the HSS is sent to the base station from the HSS through a Mobility Management Entity (MME) in response to attaching of the mobile terminal, a location registration update, a service request or the like.

The following are definitions of the terms "CONNECTED state" and "IDLE state" used in this specification and Claims. The "IDLE state" means a state in which a mobile terminal does not continuously send or receive control signals for session management and mobility management to or from an MCN, and radio connections in a RAN have been released. An example of the IDLE state is an EPS Connection Management IDLE (ECM-IDLE) state and a Radio Resource Control IDLE (RRC_IDLE) state of the 3GPP. In the RRC_IDLE, RRC_Connection, which is a radio connection in the E-UTRAN, is released.

Meanwhile, the "CONNECTED state" means a state in which, as in an ECM-CONNECTED state and an RRC_CONNECTED state of the 3GPP, a radio connection at least for sending and receiving control signals (control messages) for session management and mobility management between the mobile terminal and the MCN is established in a RAN, and such a connection is established as to be able to send and receive control signals (control messages) between the mobile terminal and the MCN. In short, it is only necessary that the "CONNECTED state" is a state in which the mobile terminal is connected to the MCN so as to be able to at least send and receive the control signals (control messages) for the session management and the mobility management. The "CONNECTED state" may be a state in which a data bearer is configured for transmitting and receiving user data between the mobile terminal and an external packet data network (PDN). Alternatively, the "CONNECTED state" may be a state in which the mobile terminal does not have the data bearer though it has the control connection with the MCN. The "CONNECTED state" can also be called an "ACTIVE state".

Typically, the MCN tracks the location of a CONNECTED state mobile terminal with a cell level granularity, and tracks the location of an IDLE state mobile terminal with a registration area level granularity. The registration area (e.g., a tracking area or a routing area) includes a plurality of cells. When moved from one location registration area to another location registration area, a mobile terminal which is in the IDLE state sends to the MCN a message indicating an update of the location registration area. Upon arrival of downlink traffic (downlink data or incoming voice call) to the mobile terminal which is in the IDLE state, the MCN sends a paging signal to a paging area defined based on the location registration area.

In this specification, a timer that measures a duration time of the inactive state, during which data of a mobile terminal is neither transmitted nor received, to determine a transition of a mobile terminal from the CONNECTED state to the IDLE state is referred to as a "UE inactivity timer" according to the terminology used in the 3GPP.

Patent Literature 1: JP-11-313370 A
Patent Literature 2: WO 2012/093433 A1
Patent Literature 3: WO 2012/093434 A1
Non-patent literature 1: 3GPP S2-120475, "Inactivity timer management function", NTT docomo and NEC, 3GPP TSG-SA2 Meeting #89, Vancouver, Canada, 6-10 February 2012
Non-patent literature 2: 3GPP S2-120476, "Inactivity timer management function", NTT docomo and NEC, 3GPP TSG-SA2 Meeting #89, Vancouver, Canada, 6-10 February 2012
3GPP TS 36.413 V11.1.0 is a technical specification of the 3rd Generation Partnership Project specifying the E-UTRAN radio network layer signaling protocol for the S1 interface.

US 2010/0272050 A1 relates to a method and a corresponding apparatus for managing User Equipment history information.

### Summary of Invention

### Technical Problem

The present inventors have examined measurements of mobile terminal behavior (e.g., an occurrence rate of communication or an occurrence rate of movement) in a RAN (e.g., a base station or a Radio Network Controller (RNC)) and a determination of an appropriate timer value (expiration period) of a UE inactivity timer for each mobile terminal (or each mobile terminal group) based on the measurement results, and have found various problems from the examination. One of these problems is that, when a mobile terminal makes a transition to the IDLE state, the RAN (e.g., a base station or an RNC) stops acquisition and update of RAN terminal information regarding the mobile terminal and releases the RAN terminal information retained until then. The RAN terminal information includes, for example, at least one of (a) measurement information regarding the mobile terminal acquired in the RAN; (b) history information regarding the mobile terminal acquired in the RAN; and (c) configuration information regarding the mobile terminal determined in the RAN. Accordingly, for example, it is difficult for the RAN to collect the measurement information or the history information regarding the mobile terminal for a time period over a plurality of CONNECTED-IDLE transitions and to perform a setting regarding the mobile terminal (e.g., the UE inactivity timer value) based on this long-term information. Further, the RAN does not retain any of measurement information and history information regarding a mobile terminal at the time just after the mobile terminal has made a transition to the CONNECTED state, and thus the RAN cannot perform a setting (e.g., an UE inactivity timer value) regarding the mobile terminal based on the measurement information or the history information.

That the RAN terminal information retained in the RAN is released in response to the transition of the mobile terminal to the IDLE state can be a problem in other cases than the case of determination of the UE inactivity timer value. In other words, that the RAN cannot continuously use the RAN terminal information (e.g., measurement information or history information) for a time period over a plurality of CONNECTED-IDLE transitions may generally be a problem when the RAN performs some decisions or settings regarding the mobile terminal. The decisions or the settings regarding the mobile terminal in the RAN includes, for example, determination of initiation of a handover, determination of a handover target cell, and determination of a back-off time in a random access procedure.

Patent literature 1 discloses measuring, in a base station, an occurrence rate of communication of a mobile terminal and changing an expiration period of a timer regarding sleep-mode transition according to the occurrence rate of communication of the mobile terminal. Patent literature 1, however, does not teach any method for retaining and continuously using measurement information of the occurrence rate of communication.

Accordingly, an object of the present invention is to provide a radio access network apparatus being a base station, a core network apparatus and corresponding methods which have been improved to enable a RAN to continuously use RAN terminal information (e.g., measurement information or history information) for a time period over a plurality of CONNECTED-IDLE transitions.

### Solution to Problem

The present invention is defined by the independent claims. Dependent claims refer to preferred embodiments. In a first exemplary aspect, a radio access network apparatus arranged in a radio access network includes an information management unit. The information management unit is configured to send, to a core network, RAN terminal information regarding a mobile terminal, and is further configured to receive the RAN terminal information from the core network.

In a second exemplary aspect, a core network apparatus arranged in a core network includes a control unit. The control unit is configured to receive, from a radio access network, RAN terminal information regarding a mobile terminal, and is further configured to send the RAN terminal information to the radio access network.

In a third exemplary aspect, a mobile terminal includes a radio communication unit. The radio communication unit is used in combination with a base station according to the first aspect described above, and is configured to communicate with the base station, which retains the RAN terminal information, in accordance with a setting by the base station.

In a fourth exemplary aspect, a method performed by a radio access network apparatus includes sending, to a core network, RAN terminal information regarding a mobile terminal.

In a fifth exemplary aspect, a method performed by a core network apparatus includes receiving, from a radio access network, RAN terminal information regarding a mobile terminal and sending the RAN terminal information to the radio access network.

In a sixth exemplary aspect, a program includes instructions to cause a computer to perform the method according to the fourth aspect stated above.

In a seventh exemplary aspect, a program includes instructions to cause a computer to perform the method according to the fifth aspect stated above.

In the first to seventh exemplary aspects stated above, the RAN terminal information includes at least one of: (a) measurement information regarding the mobile terminal acquired in the radio access network; (b) history information regarding the mobile terminal acquired in the radio access network; and (c) configuration information regarding the mobile terminal determined in the radio access network.

### Advantageous Effects of Invention

According to the invention stated above, it is possible to provide a radio access network apparatus being a base station, a core network apparatus and corresponding methods which have been improved to enable a RAN to continuously use RAN terminal information (e.g., measurement information or history information) for a time period over a plurality of CONNECTED-IDLE transitions.

### Brief Description of Drawings

Fig. 1 is a block diagram showing a configuration example of a mobile communication system according to a first embodiment;
Fig. 2 is a sequence diagram showing an example of a method of saving RAN terminal information according to the first embodiment;
Fig. 3 is a sequence diagram showing an example of the method of saving the RAN terminal information according to the first embodiment;
Fig. 4 is a sequence diagram showing an example of the method of saving the RAN terminal information according to the first embodiment;
Fig. 5 is a sequence diagram showing an example of a method of reading out the RAN terminal information according to the first embodiment;
Fig. 6 is a sequence diagram showing an example of the method of reading out the RAN terminal information according to the first embodiment;
Fig. 7 is a flowchart showing an example of a procedure for saving the RAN terminal information by a RAN apparatus (e.g., base station, RNC) according to the first embodiment;
Fig. 8 is a flowchart showing an example of a procedure for reading out the RAN terminal information by the RAN apparatus (e.g., base station, RNC) according to the first embodiment;
Fig. 9 is a flowchart showing an example of a procedure for setting a UE INACTIVITY TIMER by the RAN apparatus (e.g., base station, RNC) according to the first embodiment;
Fig. 10 is a block diagram showing a configuration example of the RAN apparatus (e.g., base station) according to the first embodiment;
Fig. 11 is a block diagram showing a configuration example of an MCN apparatus (e.g., mobility management node) according to the first embodiment;
Fig. 12 is a block diagram showing a configuration example of the mobile communication system according to the first embodiment;
Fig. 13 is a sequence diagram showing an example of a method of saving RAN terminal information according to a second embodiment;
Fig. 14 is a sequence diagram showing an example of the method of saving the RAN terminal information according to the second embodiment;
Fig. 15 is a sequence diagram showing an example of a method of reading out the RAN terminal information according to the second embodiment;
Fig. 16 is a sequence diagram showing an example of the method of reading out the RAN terminal information according to the second embodiment;
Fig. 17 is a sequence diagram showing an example of a method of sending RAN terminal information between MCN apparatuses (e.g., mobility management nodes) according to a third embodiment;
Fig. 18 is a sequence diagram showing an example of the method of sending the RAN terminal information between the MCN apparatuses (e.g., mobility management nodes) according to the third embodiment;
Fig. 19 is a sequence diagram showing an example of the method of sending the RAN terminal information between the MCN apparatuses (e.g., mobility management nodes) according to the third embodiment;
Fig. 20 is a sequence diagram showing an example of a method of sending RAN terminal information between RAN apparatuses (e.g., base stations, RNCs) according to a fourth embodiment; and
Fig. 21 is a sequence diagram showing an example of the method of sending the RAN terminal information between the RAN apparatuses (e.g., base stations, RNCs) according to the fourth embodiment.

### Description of Embodiments

Hereinafter, specific embodiments of the present invention will be described in detail with reference to the drawings. Throughout the drawings, the same or corresponding components are denoted by the same reference symbols, and repetitive explanations will be omitted as appropriate for the sake of clarification.

### First embodiment

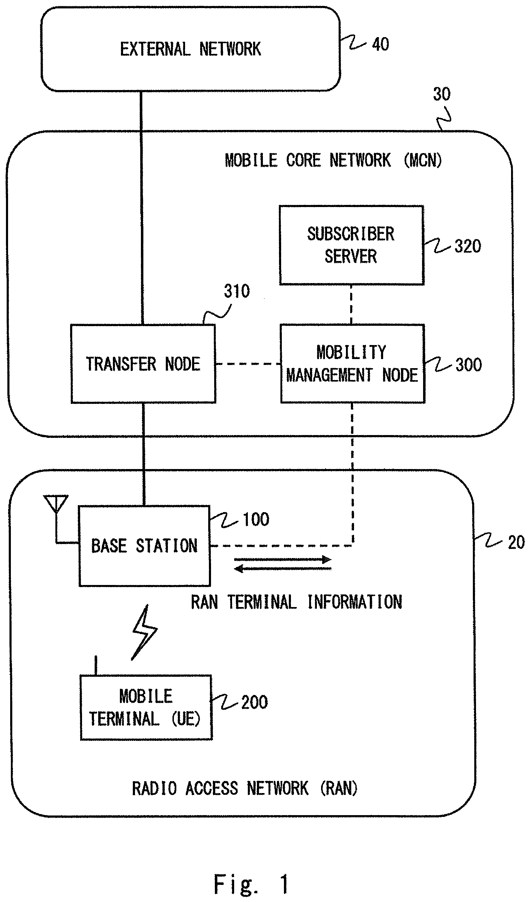

Fig. 1 is a block diagram showing a configuration example of a network including a mobile communication system according to this embodiment. The configuration example shown in Fig. 1 includes a radio access network (RAN) 20 and a mobile core network (MCN) 30. The basic configurations and functions of the RAN 20 and the MCN 30 will be described first.

The RAN 20 includes a base station 100 and a radio resource management function. The radio resource management function may be arranged in a RAN node other than the base station 100, or may be arranged in the base station 100. For example, in a 3GPP Universal Mobile Telecommunications System (UMTS), the radio resource management function is arranged in an RNC. Meanwhile, in a 3GPP Evolved Packet System (EPS), the radio resource management function is arranged in a base station (eNB). The RAN 20 is, for example, an E-UTRAN or a UTRAN, or the combination thereof.

The base station 100 is connected to a mobile terminal 200 by means of a radio access technology. In the E-UTRAN, the base station 100 corresponds to an E-UTRAN NodeB (eNB). In the UTRAN, the base station 100 corresponds to the functions of a NodeB and a Radio Network Controller (RNC). The base station 100 sends and receives control messages (e.g., S1 Application Protocol (S1AP) messages) to and from a mobility management node 300 in the MCN 30 and transmits and receives user data (or tunnel packets in which the user data is encapsulated) to and from a transfer node 310 in the MCN 30.

The mobile terminal 200 has a radio interface, is connected to the base station 100 by means of a radio access technology, and is also connected to the MCN 30 through the RAN 20 (i.e., base station 100). The mobile terminal 200 communicates with an external network 40 through the RAN 20 and the MCN 30. The external network 40 includes the Internet, a packet data network, a PSTN, or any combination thereof. Further, the mobile terminal 200 sends and receives Non-Access Stratum (NAS) messages to and from a control node (e.g., mobility management node 300) in the MCN 30. The NAS messages are control messages that are not terminated at the RAN 20 and are transparently transferred between the mobile terminal 200 and the MCN 30 without depending on the radio access technology in the RAN 20. The NAS messages transmitted from the mobile terminal 200 to the MCN 30 include NAS request messages such as a location update request, a session (bearer) request, and an attach request. In the case of the EPS, for example, the NAS request messages from the mobile terminal 200 include at least one of an Attach Request, a Service Request, a PDN connectivity request, a Bearer Resource Allocation Request, a Bearer Resource Modification Request, a Tracking Area Update (TAU) Request, and a Routing Area Update (RAU) Request. Meanwhile, the NAS messages transmitted from the MCN 30 to the mobile terminal 200 include ACCEPT and REJECT messages as replies to these NAS request messages.

The MCN 30 is a network mainly managed by an operator that provides mobile communication services. The MCN 30 is a Circuit Switched (CS) core or a Packet Switched (PS) core, or a combination thereof. The MCN 30 is, for example, an EPC in the EPS, or a General Packet Radio Service (GPRS) packet core in the UMTS, or a combination thereof. In the example shown in Fig. 1, the MCN 30 includes a mobility management node 300, a transfer node 310, and a subscriber server 320.

The mobility management node 300 is a control-plane node, and performs mobility management (e.g., location registration) of the mobile terminal 200, session (bearer) management (e.g., bearer establishment, bearer modification, and bearer release) and the like. The mobility management node 300 sends and receives control messages (e.g., S1AP messages) to and from the base station 100 and sends and receives NAS messages to and from the mobile terminal 200. In the case of the UMTS, for example, the mobility management node 300 includes control plane functions of an SGSN. In the case of the EPS, the mobility management node 300 includes an MME.

The transfer node 310 provides a user plane function including transfer of user data or circuit switching between the mobile terminal 200 and the external network 40. In the case of the UMTS, for example, the transfer node 310 includes user plane functions of an MSC, user plane functions of an SGSN, and a Gateway GPRS Support Node (GGSN). In the case of the EPS, the transfer node 310 includes a Serving Gateway (S-GW) and a PDN Gateway (P-GW).

The subscriber server 320 is a database that retains subscriber data regarding the mobile terminal 200. The subscriber server 320 corresponds, for example, to a Home Subscriber Server (HSS) or a Home Location Register (HLR). The subscriber server 320 sends the subscriber data to the mobility management node 300 in response to a request from the mobility management node 300.

The base station 100 according to this embodiment acquires RAN terminal information (RAN UE Context) regarding the mobile terminal 200 and performs a setting regarding the mobile terminal 200 using the RAN terminal information. Further, the base station 100 is configured to send the acquired RAN terminal information to the MCN 30 in order to save the RAN terminal information in the MCN 30, and is also configured to receive the saved RAN terminal information from the MCN 30 in order to read out (i.e., retrieve) the RAN terminal information. The RAN terminal information sent to the base station 100 from the MCN 30 may be information that have been acquired by another base station 100 and have been saved in the MCN 30.

Now, the term "RAN terminal information" used in this specification will be defined. The RAN terminal information in this specification is information regarding the mobile terminal 200 acquired or determined in the RAN 20 and includes at least one of the following (a) to (c):
(a) measurement information regarding the mobile terminal 200 acquired in the RAN 20;
(b) history information regarding the mobile terminal 200 acquired in the RAN 20; and
(c) configuration information regarding the mobile terminal 200 determined in the RAN 20.

The above information (a) to (c) may be acquired or determined for each mobile terminal 200 or may be acquired or determined for each terminal group. The terminal group may be defined, for example, by a unit of a terminal type, a unit of a service used by the mobile terminal 200, or a unit of a Quality of Service (QoS) class requested by the mobile terminal 200. When the terminal group is defined by a unit of a QoS class, a QoS Class Indicator (QCI) may be used as an index. Further, the above information (a) to (c) may be managed on a time basis for the mobile terminal 200. By managing the information (a) to (c) on a time basis, it is possible to finely manage the mobile terminal according to the behavior of the mobile terminal 200. Specific examples of the information (a) to (c) as the RAN terminal information will be described below.

### (a) Measurement information regarding the mobile terminal 200

The RAN 20 (e.g., the base station 100) can acquire measurement information indicating behavior of the mobile terminal 200 such as communication properties, moving properties, or handover properties of the mobile terminal 200. For example, the RAN 20 can measure a communication duration time, a communication frequency band, a communication interval (a non-communication time), occurrence rate of communication, Modulation and Coding Schemes (MCS), a communication data amount, throughput, a communication delay, packet loss, a discarded packet amount, or a type of service to be used, or any statistical value thereof (e.g., an average value, a median value, a maximum value, a minimum value) regarding the communication of the mobile terminal 200. The communication properties of the mobile terminal 200 may be measured on a radio bearer or may be measured on a bearer between the RAN 20 and the MCN 30 (e.g., S1 bearer or EPS Radio Access Bearer (E-RAB)). The RAN 20 may acquire such information indicating the communication properties of the mobile terminal 200 as measurement information regarding the mobile terminal 200. The RAN 20 can acquire information indicating moving properties of the mobile terminal 200 (e.g., history of cells (or base stations) in which the mobile terminal 200 stayed, time during which the mobile terminal 200 stayed in a cell (or a base station), a moving speed, or a moving vector, or any statistical value thereof. The RAN 20 may acquire such information indicating the moving properties of the mobile terminal 200 as the measurement information regarding the mobile terminal 200. The RAN 20 can also acquire information indicating handover properties of the mobile terminal 200 (e.g., the number of handover attempts, the number of times of handover failure (e.g., Too Late Handovers or Too Early Handovers), or a handover failure rate, or any statistical value thereof. The RAN 20 may acquire such information indicating the handover properties of the mobile terminal 200 as the measurement information regarding the mobile terminal 200.

### (b) History information regarding the mobile terminal 200

The RAN 20 (e.g., the base station 100) can acquire history information indicating behavior of the mobile terminal 200 such as communication properties or moving properties of the mobile terminal 200. The history information regarding the mobile terminal 200 includes, for example, at least one of a communication history of the mobile terminal 200, a movement history of the mobile terminal 200, and a service usage history of the mobile terminal 200. Note that the history information regarding the mobile terminal 200 and the measurement information regarding the mobile terminal 200 may not be clearly distinguished from each other. At least a part of the measurement information regarding the mobile terminal 200 stated above may be called history information regarding the mobile terminal 200.

### (c) Configuration information regarding the mobile terminal 200

The RAN 20 can perform a setting regarding the mobile terminal 200 using the measurement information or the history information regarding the mobile terminal 200 described above. The setting performed by the RAN 20 includes, for example, a timer value (expiration period) of an UE INACTIVITY TIMER, handover parameters (e.g., an A3-offset and a Time to Trigger (TTT)), a back-off time in a random access procedure, (an average value of) an access restriction time during which an access to a base station is restricted (ac-BarringTime), or a terminal priority. The terminal priority indicates the priority of the mobile terminal 200 (or the terminal group) with respect to other mobile terminals (or terminal groups), and is used, for example, in determination of the aforementioned configuration information (a timer value of an UE INACTIVITY TIMER, handover parameters, or a back-off time in a random access procedure) or in radio resource allocation.

As stated above, the base station 100 is configured to save the RAN terminal information (e.g., measurement information, history information), which has been obtained in the RAN 20, in the MCN 30. The base station 100 is further configured to read out the RAN terminal information saved in the MCN 30 from the MCN 30. Accordingly, even when the RAN 20 has released (deleted) the RAN terminal information according to a transition of the mobile terminal 200 to the IDLE state, the base station 100 can read out and use the saved RAN terminal information, which has been saved in the MCN 30, for the following settings of the mobile terminal 200. In other words, the base station 100 can continuously use the RAN terminal information for a time period over a plurality of CONNECTED-IDLE transitions of the mobile terminal 200. Accordingly, the base station 100 can perform a setting regarding the mobile terminal 200 (e.g., settings of a timer value of an UE INACTIVITY TIMER) in consideration of the long-term RAN terminal information regarding the mobile terminal 200.

In the following description, specific examples of when the RAN terminal information is saved in the MCN 30 from the RAN 20 and examples of when the RAN terminal information is read out from the MCN 30 to the RAN 20 will be described. As already described above, in a typical mobile communication system, the RAN (e.g., a base station or an RNC) stops, at the time of the transition of the mobile terminal to the IDLE state, acquisition and update of the RAN terminal information regarding the mobile terminal and releases the RAN terminal information retained until then. Accordingly, for example, when releasing the RAN terminal information regarding the mobile terminal 200, the base station 100 may send the information to the MCN 30. To be more specific, the base station 100 may send the RAN terminal information to the MCN 30 in response to cessation of autonomous acquisition of the RAN terminal information in the base station 100. Alternatively, the base station 100 may send, to the MCN 30, the RAN terminal information regarding the mobile terminal 200 in response to a transition of the mobile terminal 200 from the CONNECTED state to the IDLE state. Further alternatively, the base station 100 may send, to the MCN 30, the RAN terminal information regarding the mobile terminal 200 in response to an outgoing handover of the mobile terminal 200 from one of its own cells to a cell of another base station. By sending the RAN terminal information to the MCN 30 at any of these timings, the base station 100 can save, in the MCN 30, the RAN terminal information to be released (or deleted).

Meanwhile, the base station 100 may receive, from the MCN 30, the saved RAN terminal information regarding the mobile terminal 200 in response to initiation (re-start) of autonomous acquisition of the RAN terminal information regarding the mobile terminal 200. To be more specific, the base station 100 may receive from the MCN 30 the RAN terminal information regarding the mobile terminal 200 in response to a transition of the mobile terminal 200 from the IDLE state to the CONNECTED state. Alternatively, the base station 100 may receive from the MCN 30 the RAN terminal information regarding the mobile terminal 200 in response to an incoming handover of the mobile terminal 200 to one of its own cells from a cell of another base station. According to any one of the above operations, the base station 100 can continuously use the RAN terminal information of the mobile terminal 200 (e.g., measurement information, history information, or configuration information) for a time period over a plurality of CONNECTED-IDLE transitions.

The above examples of when the RAN terminal information is saved in the MCN 30 from the RAN 20 and examples of when the RAN terminal information is read out from the MCN 30 to the RAN 20 are merely preferable examples. For example, when a signaling for a location update or the like of the mobile terminal 200 occurs between the base station 100 and the MCN 30, the base station 100 may send the RAN terminal information regarding the mobile terminal 200 to the MCN 30. In this case, the base station 100 may add the RAN terminal information into the control message to be sent to the mobility management node 300 for the location update, for example. By adding the RAN terminal information in the existing control message sent from the RAN 20 to the MCN 30, there is no need to send a new control message, and thus it is possible to suppress an increase in the number of times of signaling due to the saving of the RAN terminal information in the MCN 30. Further, the base station 100 may send the RAN terminal information to the MCN 30 at any time, such as when the RAN terminal information is updated.

Next, management entities of the RAN terminal information in the MCN 30 will be described. As an example, the mobility management node 300 may manage the RAN terminal information. The mobility management node 300 has a signaling interface with the RAN 20 (e.g., base station 100). Further, the mobility management node 300 retains a context regarding the mobile terminal 200 in the IDLE state in order to perform mobility management of this mobile terminal 200. Accordingly, the mobility management node 300 manages the RAN terminal information in association with, for example, the context regarding the mobile terminal 200, whereby it is possible to easily manage the RAN terminal information in the MCN 30. The RAN terminal information, however, may be retained in another node in the MCN 30 (e.g., the subscriber server 320). Since the subscriber server 320 retains the subscriber information regarding the mobile terminal 200, the subscriber server 320 may retain the RAN terminal information in association with the subscriber information. Further, since the subscriber server 320 typically has a signaling interface with the mobility management node 300, the subscriber server 320 may receive the RAN terminal information from the base station 100 through the mobility management node 300.

Further, the mobility management node 300 may release (delete) the RAN terminal information, which has been saved in the mobility management node 300 regarding the mobile terminal 200, in response to a detach of the mobile terminal 200 from the MCN 30. Since the mobility management node 300 performs mobility management of the mobile terminal 200, the mobility management node 300 is able to easily recognize a detach of the mobile terminal 200. Release of the RAN terminal information regarding detached mobile terminal 200 can contribute to suppression of the volume of the RAN terminal information accumulated in the MCN 30. Alternatively, the mobility management node 300 may also save the RAN terminal information, which has been saved in the mobility management node 300, in the subscriber server 320 in response to a detach of the mobile terminal 200 from the MCN 30. According to such an operation, the subscriber server 320 can retain the latest RAN terminal information.

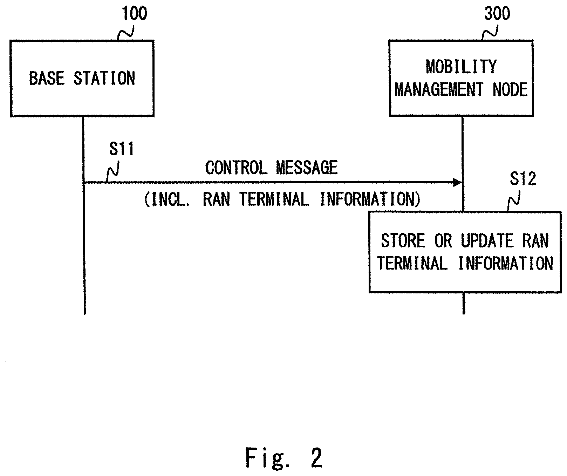

In the following description, specific examples of a method of saving the RAN terminal information in the MCN 30 according to this embodiment and a method of reading out the RAN terminal information from the MCN 30 will be described with reference to sequence diagrams. Fig. 2 is a sequence diagram showing an example of the method of saving the RAN terminal information in the mobility management node 300 from the base station 100. In Step S11, the base station 100 sends a control message including the RAN terminal information to the mobility management node 300. The control message also includes an identifier (e.g., an International Mobile Subscriber Identity (IMSI)) to identify the mobile terminal 200 (or the terminal group). In Step S12, the mobility management node 300 saves (stores) the received RAN terminal information in order to respond to a future read request from the base station 100 or other base stations. When the mobility management node 300 has already saved the RAN terminal information that was received before, the mobility management node 300 may update the previous information with the newly received RAN terminal information.

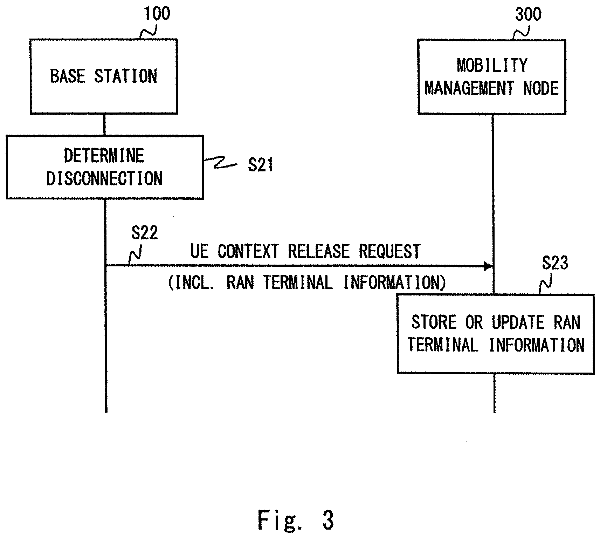

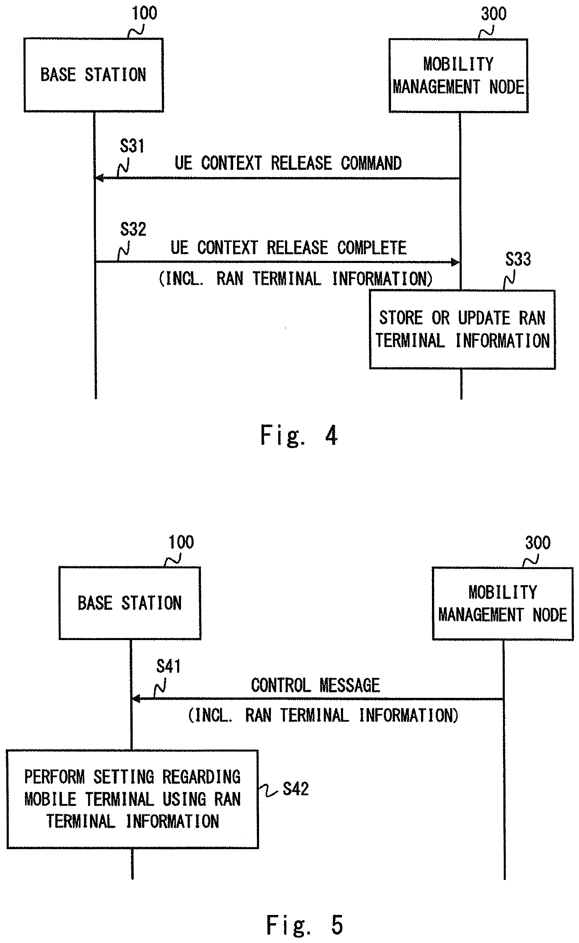

As already described above, the base station 100 may save the RAN terminal information regarding the mobile terminal 200 in the MCN 30 in response to the transition of the mobile terminal 200 from the CONNECTED state to the IDLE state. Figs. 3 and 4 are sequence diagrams showing an example of saving the RAN terminal information in the MCN 30 in response to the transition of the mobile terminal 200 to the IDLE state in the 3GPP EPS network. The example shown in Fig. 3 relates to a case in which the base station (in this example, eNB) 100 determines the transition of the mobile terminal 200 to the IDLE state. Specifically, in Step S21, the base station 100 determines to disconnect a Radio Resource Control (RRC) connection with the mobile terminal 200 in response to, for example, an expiration of the UE INACTIVITY TIMER. In Step S22, the base station 100 sends the RAN terminal information to the mobility management node (in this example, MME) 300 using a UE CONTEXT RELEASE REQUEST message. The UE CONTEXT RELEASE REQUEST message is an S1AP message sent to an MME from an eNB to request release of a S1 connection associated with a specific mobile terminal. In Step S23, the mobility management node 300 stores the RAN terminal information received from the base station 100.

The example shown in Fig. 4 relates to a case in which the mobility management node (in this example, MME) 300 determines the transition of the mobile terminal 200 to the IDLE state. Specifically, in Step S31, the mobility management node 300 sends a UE CONTEXT RELEASE COMMAND message regarding the mobile terminal 200 to the base station (in this example, eNB) 100. The UE CONTEXT RELEASE COMMAND message is an S1AP message sent to the eNB from the MME to request release of an S1 connection associated with a specific mobile terminal. In response to the reception of the UE CONTEXT RELEASE COMMAND message, the base station 100 releases all the resources allocated to the mobile terminal 200 for signaling and user data transmission. The base station 100 then sends a UE CONTEXT RELEASE COMPLETE message to the mobility management node 300 (Step S32). In the example shown in Fig. 4, the UE CONTEXT RELEASE COMPLETE message includes the RAN terminal information regarding the mobile terminal 200 that makes the transition to the IDLE state. In Step S33, the mobility management node 300 saves (stores) the RAN terminal information received from the base station 100.

The sequences of the method of saving the RAN terminal information shown in Figs. 3 and 4 are merely examples. As already described above, the base station 100 may send the RAN terminal information to the mobility management node 300 when a location update of the mobile terminal 200 is performed, when an outgoing handover is performed, or at any other time. In the case of the 3GPP EPS network, for example, the control message shown in Step S11 in Fig. 2 may be (i) an INITIAL UE MESSAGE message, (ii) a HANDOVER REQUIRED message to request for the S1 handover, or (iii) a UE CONTEXT MODIFICATION RESPONSE message. Further, the mobile communication system according to this embodiment may be a 3GPP UMTS network. In the case of the UMTS network, the control message shown in Step S11 in Fig. 2 may be a Radio Access Network Application Part (RANAP) message sent from an RNC to an MCN. Specifically, the control message shown in Step S11 in Fig. 2 may be (i) a lu RELEASE COMPLETE message, (ii) a RAB RELEASE REQUEST message, or (iii) a RELOCATION REQUIRED message.

Next, an operation for reading out the RAN terminal information saved in the MCN 30 to the base station 100 will be described. Fig. 5 shows a sequence diagram showing an example of the method of reading out the RAN terminal information from the mobility management node 300 to the base station 100. In Step S41, the mobility management node 300 sends a control message containing the RAN terminal information to the base station 100. The control message also includes an identifier (e.g., an IMSI) to identify the mobile terminal 200 (or the terminal group). In Step S42, the base station 100 performs a setting regarding the mobile terminal 200 (e.g., an expiration period of the UE INACTIVITY TIMER or handover parameters) using the RAN terminal information received from the mobility management node 300. For example, the base station 100 may perform initialization of the mobile terminal 200, which has made a transition to the CONNECTED state, using only the RAN terminal information received from the mobility management node 300. Further, the base station 100 may perform a setting of the mobile terminal 200 using the RAN terminal information received from the mobility management node 300 and RAN terminal information newly acquired by the base station 100 itself.

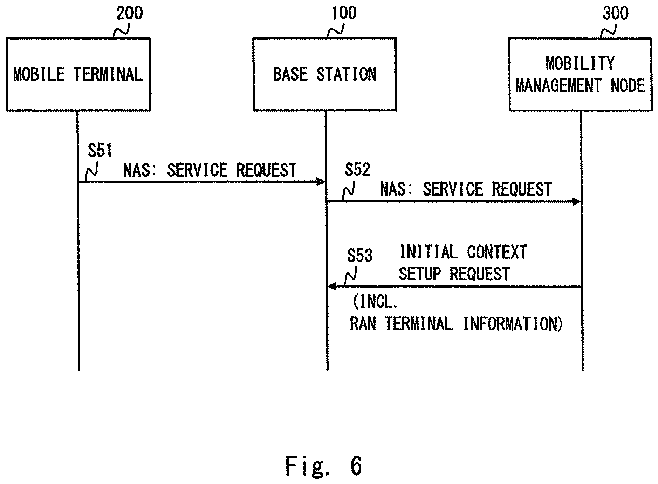

As already described above, the base station 100 may receive the RAN terminal information regarding the mobile terminal 200 from the MCN 30 in response to the transition of the mobile terminal 200 from the IDLE state to the CONNECTED state. Fig. 6 is a sequence diagram showing an example of reading out the RAN terminal information from the MCN 30 in response to the transition of the mobile terminal 200 to the CONNECTED state in the 3GPP EPS network. Specifically, in Step S51, the base station 100 receives a SERVICE REQUEST message from the mobile terminal 200. The SERVICE REQUEST message is a NAS message sent from a mobile terminal in the IDLE state (ECM-IDLE state) to request for a connection to the MCN 30. In Step S52, the base station 100 sends an INITIAL UE MESSAGE message carrying the SERVICE REQUEST message from the mobile terminal 200 to the mobility management node 300. In response to the reception of the SERVICE REQUEST message, the mobility management node 300 sends an INITIAL CONTEXT SETUP REQUEST message to the base station 100. The INITIAL CONTEXT SETUP REQUEST message is an S1AP message sent to establish a bearer (E-RAB) regarding the mobile terminal 200. In the example shown in Fig. 6, the INITIAL CONTEXT SETUP REQUEST message includes the RAN terminal information regarding the mobile terminal 200 that makes a transition to the CONNECTED state.

The sequence of the method of reading out the RAN terminal information shown in Fig. 6 is merely an example. As already described above, the base station 100 may receive the RAN terminal information from the mobility management node 300 when a location update of the mobile terminal 200 is performed, when an incoming handover is performed, or at any other time. In the case of the 3GPP EPS network, for example, the control message shown in Step S41 in Fig. 5 may be (i) a DOWNLINK NAS TRANSPORT message carrying TAU ACCEPT; (ii) a HANDOVER REQUEST message sent from an MME to a target eNB when the S1 handover is carried out; (iii) a PATH SWITCH ACKNOWLEDGE message sent from an MME to a target eNB to switch endpoints of a GTP tunnel when the S1 or X2 handover is performed; or (iv) a UE CONTEXT MODIFICATION REQUEST message. In the case of the 3GPP UMTS network, the control message shown in Step S41 in Fig. 5 may be an RANAP message sent from an MCN to an RNC. Specifically, the control message shown in Step S41 in Fig. 5 may be (i) a RAB ASSIGNMENT REQUEST message; (ii) an IU RELEASE COMMAND message; or (iii) a RELOCATION REQUEST message sent from an SGSN to a target RNC when a Serving Radio Network Subsystem (SRNS) relocation is performed.

Further, the mobility management node 300 may send the RAN terminal information, received from one base station 100 and stored in the mobility management node 300, to another base station 100. For example, the mobility management node 300 may send the RAN terminal information, received from a first base station and saved in the mobility management node 300, to a second base station in response to a movement of the mobile terminal 200 from the first base station to the second base station. Accordingly, the base station 100 can perform a setting of the mobile terminal 200 using the RAN terminal information collected by another base station even when the base station 100 does not have any RAN terminal information acquired by itself.

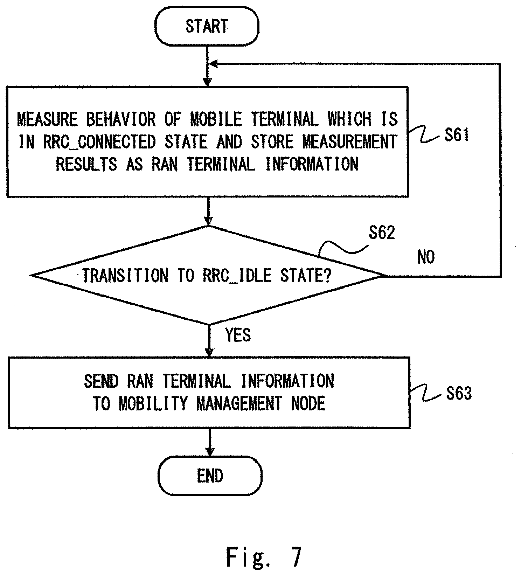

In the following description, an operation of the base station 100 according to this embodiment will be described with reference to flowcharts. Figs. 7 to 9 show flowcharts showing a case in which the base station 100 is a base station (i.e., an eNB) of the EPS network. Fig. 7 is a flowchart showing an example of a procedure, performed by the base station 100, for saving the RAN terminal information in the MCN 30. In Step S61, the base station 100 measures behavior (e.g., communication properties, moving properties, or service usage properties) of the mobile terminal 200 in the RRC_CONNETED state and retains the measurement results as the RAN terminal information. The RAN terminal information may be measured for each mobile terminal 200 or may be measured for each terminal group classified based on a terminal type or the like of the mobile terminal 200. In Step S62, the base station 100 determines a transition of the mobile terminal 200 to the RRC_IDLE state. For example, the base station 100 determines, according to the expiration of the UE INACTIVITY TIMER for the mobile terminal 200, the transition of the mobile terminal 200 to the RRC_IDLE state. When the mobile terminal 200 makes a transition to the RRC_IDLE state (YES in Step S62), the base station 100 sends a control message to the mobility management node 300 to release the radio access bearer (E-RAB) and the control connection between the mobile terminal 200 and the MCN 30. The base station 100 further sends to the mobility management node 300 the RAN terminal information of the mobile terminal 200, which makes a transition to the RRC_IDLE state (Step S63).

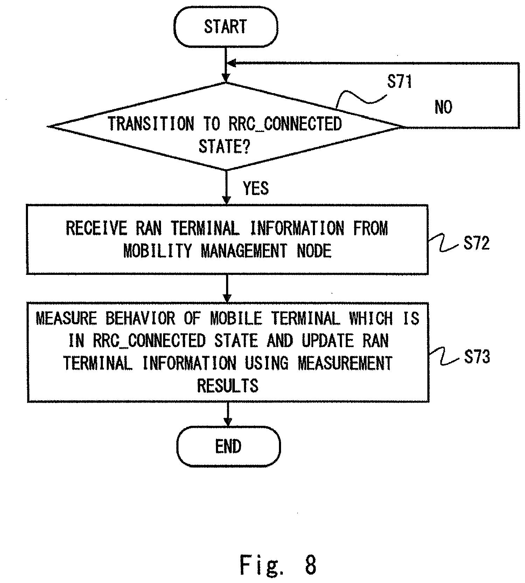

Fig. 8 is a flowchart showing an example of the procedure, performed by the base station 100, for reading out the RAN terminal information from the MCN 30. In Step S71, the base station 100 determines the transition of the mobile terminal 200 to the RRC_CONNECTED state. For example, the base station 100 determines, in response to the reception of the service request from the mobile terminal 200, the transition of the mobile terminal 200 to the RRC_CONNECTED state. In Step S72, when the mobile terminal 200 makes a transition to the RRC_CONNECTED state (YES in Step S71), the base station 100 performs signaling with the mobility management node 300 in order to establish the radio access bearer (E-RAB) and the control connection between the mobile terminal 200 and the MCN 30. The base station 100 further receives from the mobility management node 300 the RAN terminal information of the mobile terminal 200, which makes a transition to the RRC_CONNECTED state (Step S72). After that, the base station 100 starts (re-starts) measurement of behavior of the mobile terminal 200 to update the RAN terminal information using the measurement results. When the RAN terminal information is updated, for example, the RAN terminal information read out from the mobility management node 300 may be updated with the following measurement results. Further, when the statistical value (e.g., an average value) is obtained as the RAN terminal information, the base station 100 may calculate the statistical value by using both the RAN terminal information read out from the mobility management node 300 and RAN terminal information obtained by the following measurement.

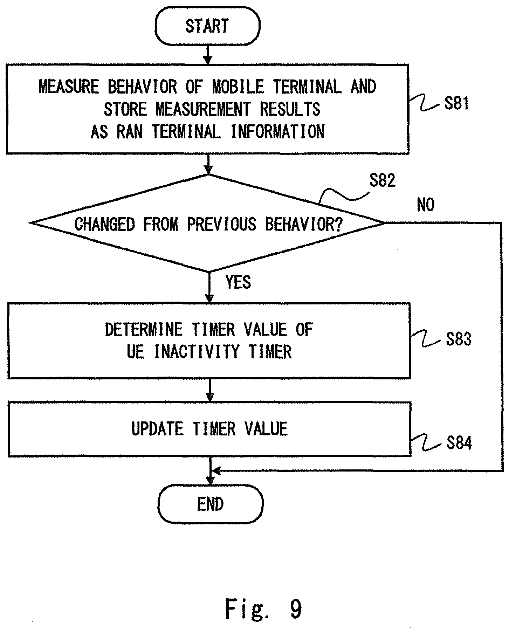

Fig. 9 is a flowchart showing an example of the procedure performed by the base station 100 for setting the UE INACTIVITY TIMER. While the setting of the UE INACTIVITY TIMER is shown as specific example of settings of the mobile terminal 200 using the RAN terminal information, the base station 100 may determine other settings (e.g., handover parameters and a random access back-off time) using the RAN terminal information of the mobile terminal 200, as already stated above. In Step S81, the base station 100 measures the RAN terminal information of the mobile terminal 200 and retains the measurement results as the RAN terminal information. As the RAN terminal information to determine the UE INACTIVITY TIMER, the average communication duration time of the mobile terminal 200 and the average non-communication time (i.e., the average communication interval) may be acquired, for example. Further or alternatively, the base station 100 may acquire the average time during which the mobile terminal 200 stays in a cell (base station) in order to take into consideration the moving properties of the mobile terminal 200. In Step S82, the base station 100 determines whether the behavior of the mobile terminal 200 has been changed from the previous behavior. It may be determined here whether the RAN terminal information such as the average communication time or the average communication interval has been changed from the previous RAN terminal information. When the behavior of the mobile terminal 200 has been changed from the previous behavior (YES in Step S82), the base station 100 determines a new timer value (expiration period) of the UE INACTIVITY TIMER applied to the mobile terminal 200 and updates the timer with the determined timer value (Steps S83 and S84).

If the timer value of the UE INACTIVITY TIMER is too short, signaling for the IDLE-CONNECTED transition of the mobile terminal 200 frequently occurs and the signaling load (signaling cost) in the RAN 20 and the MCN 30 increases. On the other hand, if the timer value of the UE INACTIVITY TIMER is too long, radio resources reserved for the mobile terminal 200 which is not performing communication are wasted (i.e., a radio resource cost is large). Accordingly, it is preferable that the timer value of the UE INACTIVITY TIMER be optimized according to the communication status of the mobile terminal 200. For example, the timer value of the UE INACTIVITY TIMER may be determined by optimizing a cost function defined using the average non-communication time (average communication interval) and the average communication time of the mobile terminal 200. By saving the RAN terminal information in the MCN 30 and reading out the RAN terminal information from the MCN 30, the base station 100 can easily and continuously acquire the statistical value related to the communication properties of the mobile terminal 200, such as the average non-communication time (average communication interval) and the average communication time, for a time period over a plurality of CONNECTED-IDLE transitions.

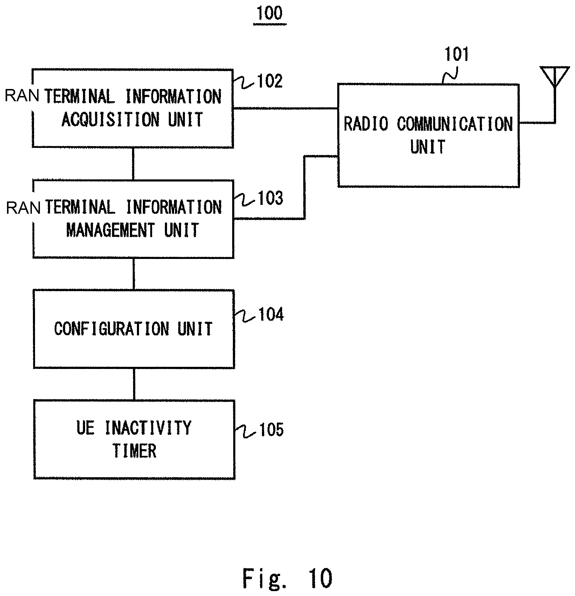

In the following description, configuration examples of the base station 100 and the mobility management node 300 will be described. Fig. 10 is a block diagram showing a configuration example of the base station 100. A radio communication unit 101 forms a cell and performs radio communication with the mobile terminal 200. Specifically, the radio communication unit 101 transmits downlink signals including a plurality of physical downlink channels to the mobile terminal 200 and receives uplink signals including a plurality of physical uplink channels from the mobile terminal 200. A RAN terminal information acquisition unit 102 autonomously acquires the RAN terminal information regarding the mobile terminal 200 that communicates with the radio communication unit 101. A RAN terminal information management unit 103 manages the RAN terminal information for each mobile terminal 200 or each terminal group. The RAN terminal information management unit 103 is configured to send to the MCN 30 the RAN terminal information regarding the mobile terminal 200 to save it, and is also configured to receive from the MCN 30 the RAN terminal information to read out it. A configuration unit 104 performs a setting regarding the mobile terminal 200 using the RAN terminal information managed by the RAN terminal information management unit 103. In the example shown in Fig. 10, the configuration unit 104 sets a timer value of a UE inactivity timer 105.

The UE inactivity timer 105 is a timer that measures a duration time of an inactive state during which user data regarding the mobile terminal 200 is neither transmitted nor received. The UE inactivity timer 105 is (re)started by the base station 100 and is used to determine the transition of the mobile terminal 200 from the CONNECTED state to the IDLE state. The UE inactivity timer 105 may be provided for each mobile terminal or for each terminal group. The terminal group may be defined, for example, by a unit of a terminal type, a unit of a service used by the mobile terminal 200, or a unit of a Quality of Service (QoS) class requested by the mobile terminal 200.

For example, the base station 100 (re)starts the UE inactivity timer 105 for the mobile terminal 200 when downlink or uplink radio resources are scheduled to the mobile terminal 200. Further or alternatively, the base station 100 may (re)start the UE inactivity timer 105 for the mobile terminal 200 in response to at least one of reception of downlink data for the mobile terminal 200, transmission of an uplink transmission grant (Uplink Grant) to the mobile terminal 200, transmission of a paging message to the mobile terminal 200, and reception of a radio resource allocation request from the mobile terminal 200. When the UE inactivity timer 105 expires, the mobile terminal 200 makes a transition from the CONNECTED state to the IDLE state.

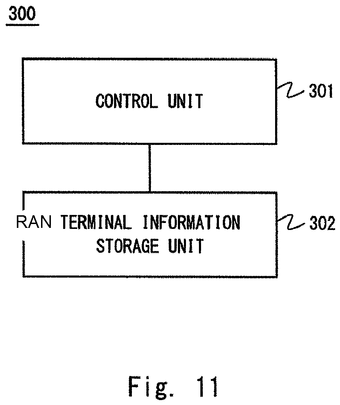

Fig. 11 is a block diagram showing a configuration example of the mobility management node 300. In the example shown in Fig. 11, the mobility management node 300 includes a control unit 301 and a RAN terminal information storage unit 302. The control unit 301 performs control to save, in the MCN 30, the RAN terminal information of the mobile terminal 200 that has been measured, acquired, or determined in the RAN 20. To be more specific, the control unit 301 is configured to receive the RAN terminal information from the RAN 20 (e.g., the base station 100) and to send the RAN terminal information to the RAN 20. Further, the control unit 301 may be configured to release the RAN terminal information regarding the mobile terminal 200 saved in the mobility management node 300 in response to a detach of the mobile terminal 200 from the MCN 30. The RAN terminal information storage unit 302 stores the RAN terminal information received by the control unit 301 from the RAN 20. The RAN terminal information storage unit 302 may be a nonvolatile storage medium (e.g., a hard disc drive) or a volatile storage medium (e.g., a Random Access Memory (RAM)), or a combination thereof.

The functions of the RAN terminal information acquisition unit 102, the RAN terminal information management unit 103, the configuration unit 104 and the like shown in Fig. 10 may be implemented by causing a computer system including at least one processor to execute a program. To be more specific, a computer system may be supplied with one or a plurality of programs including instructions to cause the computer system to perform algorithms, described with reference to Figs. 1 to 9, regarding operations performed by the base station 100 for saving and reading out the RAN terminal information. In a similar way, the function of the control unit 301 shown in Fig. 11 may also be implemented by causing a computer system to execute a program. To be more specific, a computer system may be supplied with one or a plurality of programs including instructions to cause the computer system to perform algorithms, described with reference to Figs. 1 to 6, regarding operations performed by the mobility management node 300 for saving and reading out the RAN terminal information.

These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Read Only Memory (CD-ROM), CD-R, CD-R/W, and semiconductor memories (such as mask ROM, Programmable ROM (PROM), Erasable PROM (EPROM), flash ROM, random access memory (RAM), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

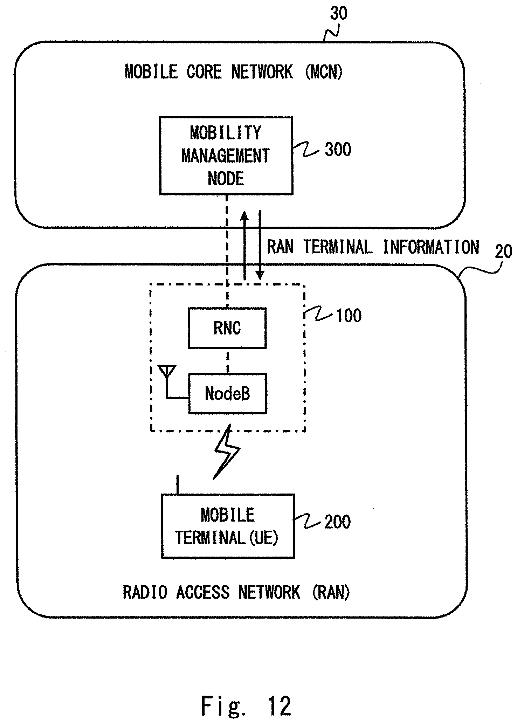

As already stated above, in the case of the UMTS, the base station 100 shown in Fig. 1 includes functions of an RNC and a NodeB. Fig. 12 shows a configuration example of the UMTS network. The mobility management node 300 shown in Fig. 12 corresponds to control plane functions of an SGSN.

As described above, the base station 100 according to this embodiment is configured to save, in the MCN 30, the RAN terminal information (e.g., measurement information or history information) obtained in the RAN 20. Further, the base station 100 is configured to read out, from the MCN 30, the RAN terminal information, which has been saved in the MCN 30. Accordingly, even when the RAN terminal information has been released (deleted) in the RAN 20 according to the transition of the mobile terminal 200 to the IDLE state, the base station 100 can read out and use the RAN terminal information saved in the MCN 30 for the following settings of the mobile terminal 200. In other words, the base station 100 can continuously use the RAN terminal information for a time period over a plurality of CONNECTED-IDLE transitions of the mobile terminal 200. Accordingly, the base station 100 can perform a setting regarding the mobile terminal 200 (e.g., a setting of a timer value of an UE INACTIVITY TIMER) in consideration of the long-term RAN terminal information regarding the mobile terminal 200.

### Second embodiment

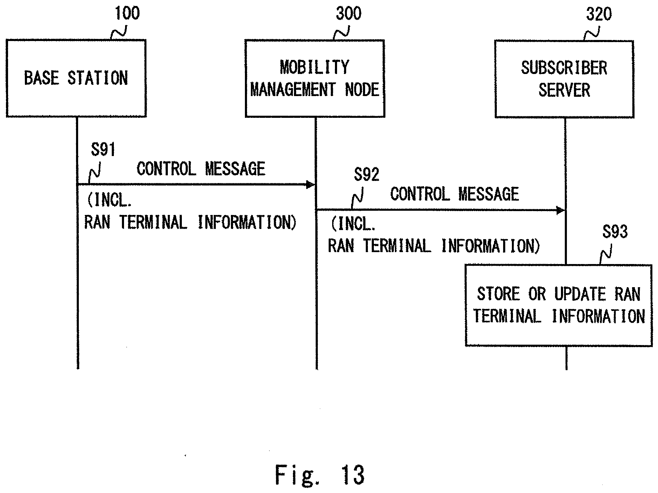

In this embodiment, an example in which the RAN terminal information is stored in the subscriber server 320 will be described. A configuration example of a mobile communication system according to this embodiment may be similar to that in Fig. 1 according to the first embodiment. The subscriber server 320 according to this embodiment receives the RAN terminal information from the base station 100 through the mobility management node 300. Fig. 13 is a sequence diagram showing an example of a method of saving, in the subscriber server 320, the RAN terminal information from the base station 100. In Step S91, the base station 100 sends a control message including the RAN terminal information to the mobility management node 300. In Step S92, the mobility management node 300 sends a control message including the RAN terminal information to the subscriber server 320. In Step S93, the subscriber server 320 stores the received RAN terminal information in order to respond to future read requests from the base station 100 or other base stations. When the subscriber server 320 has already stored the RAN terminal information that was previously received, the subscriber server 320 may update previous information with the newly received RAN terminal information. Further, the subscriber server 320 may manage the RAN terminal information for each mobility management node. In this case, it is possible to manage behavior of the mobile terminal 200 according to the location of the mobile terminal 200. For example, the mobility management node 300 that manages a residential area can manage the behavior of the mobile terminal 200 which is in the residential area and the mobility management node 300 that manages a business district can manage the behavior of the mobile terminal 200 which is in the business district.

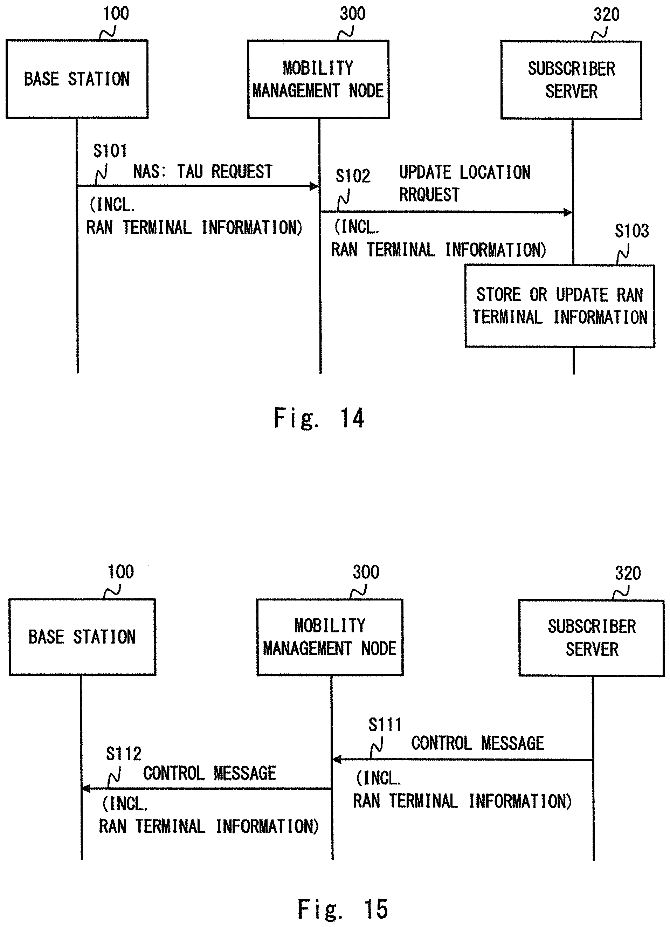

The subscriber server 320 may receive the RAN terminal information when a location update of the mobile terminal 200 is performed. Fig. 14 shows an example in which the RAN terminal information is saved in the subscriber server 320 in response to a location update of the mobile terminal 200 (i.e., a tracking area update (TAU)) in the 3GPP EPS network. In Step S101, the base station 100 sends a message carrying a TAU REQUEST to the mobility management node 300 in response to the reception of the TAU REQUEST from the mobile terminal 200. This message further includes the RAN terminal information. This message may be an UPLINK NAS TRANSPORT message or a Handover Required message. In Step S102, the mobility management node 300 sends an UPDATE LOCATION REQUEST message to the subscriber server 320 in response to the reception of the TAU REQUEST. This UPDATE LOCATION REQUEST includes the RAN terminal information. In Step S103, the subscriber server 320 stores the received RAN terminal information.

Next, an operation for reading out the RAN terminal information saved in the subscriber server 320 to the base station 100 will be described. Fig. 15 shows a sequence diagram showing an example of a method of reading out the RAN terminal information from the subscriber server 320 to the base station 100. In Step S111, the subscriber server 320 sends a control message including the RAN terminal information to the mobility management node 300. In Step S112, the mobility management node 300 sends a control message including the RAN terminal information to the base station 100.

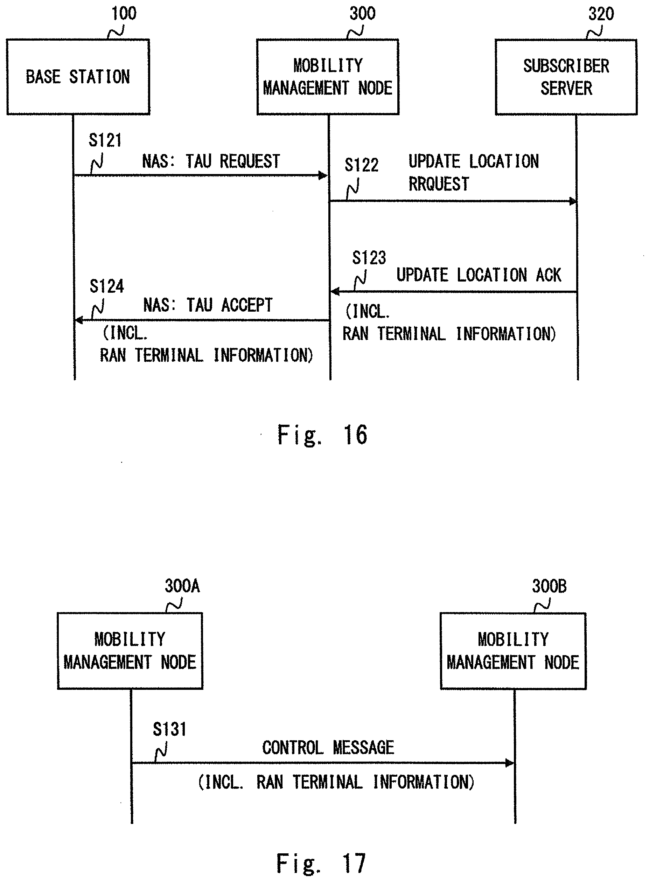

When the mobile terminal 200 moves across location registration areas, the subscriber server 320 may send the RAN terminal information to the mobility management node 300 that manages a new location registration area. Fig. 16 is a sequence diagram showing an example in which the RAN terminal information is sent from the subscriber server 320 in response to a movement of the mobile terminal 200 to the new location registration area in the 3GPP EPS network. In Step S121, in response to the reception of the TAU REQUEST from the mobile terminal 200, the base station 100 sends an INITIAL UE MESSAGE message carrying the TAU REQUEST to the mobility management node 300. In Step S122, the mobility management node 300 sends an UPDATE LOCATION REQUEST message to the subscriber server 320 in response to the reception of the TAU REQUEST. In Step S123, the subscriber server 320 requests the old mobility management node to cancel the location registration. The subscriber server 320 then sends an UPDATE LOCATION ACK message to the new mobility management node 300 (Step S123). This UPDATE LOCATION ACK message includes the RAN terminal information. In Step S124, the mobility management node 300 sends a DOWNLINK NAS TRANSPORT message carrying the TAU ACCEPT to the base station 100. This DOWNLINK NAS TRANSPORT message includes the RAN terminal information regarding the mobile terminal 200 which has originated the TAU REQUEST. Accordingly, the base station 100 receives the RAN terminal information regarding the mobile terminal 200.

According to this embodiment, the subscriber server 320 is able to store the RAN terminal information. When the RAN terminal information is passed between different mobile operators, for example, the subscriber server 320 may store and manage the RAN terminal information.

### Third embodiment

In this embodiment, a transfer of the RAN terminal information between two mobility management nodes 300 will be described. A configuration example of a mobile communication system according to this embodiment may be similar to that in Fig. 1 according to the first embodiment. However, the MCN 30 includes at least two mobility management nodes 300. The mobility management node 300 according to this embodiment is configured to send the RAN terminal information received from the base station 100 to another mobility management node 300. Fig. 17 is a sequence diagram showing a method of sending the RAN terminal information between two mobility management nodes 300. In Step S131, a mobility management node 300A sends a control message including the RAN terminal information to the mobility management node 300B.

The mobility management node 300 according to this embodiment may send the RAN terminal information to another mobility management node in response to an inter-cell movement (i.e., cell re-selection) of the mobile terminal 200 in the IDLE state. Specifically, the mobility management node 300 may send the RAN terminal information to another mobility management node when the mobile terminal 200 in the IDLE state has moved to a cell (base station) belonging to another mobility management node and have sent a location update request to another mobility management node.

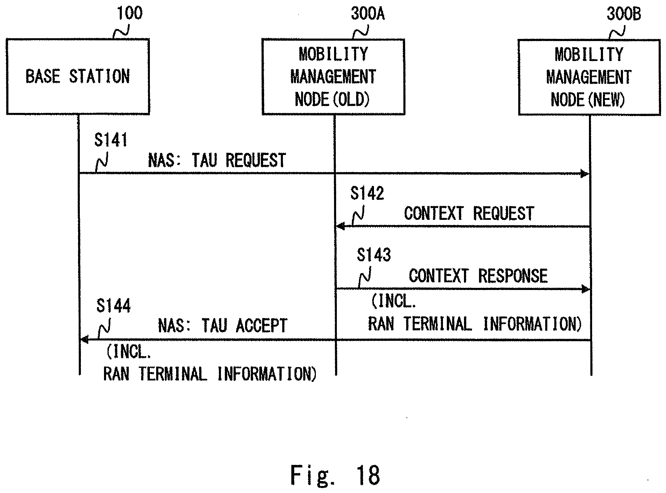

Fig. 18 shows a sequence diagram showing an example in which the RAN terminal information is sent between the mobility management nodes 300 in response to the inter-cell movement of the mobile terminal 200 in the IDLE state, in the 3GPP EPS network. In Step S141, the base station 100 sends an INITIAL UE MESSAGE message carrying the TAU REQUEST to a mobility management node 300B in response to the reception of the TAU REQUEST from the mobile terminal 200. In Step S142, the mobility management node 300B sends a CONTEXT REQUEST message to the old mobility management node 300A based on an identifier (i.e., a Globally Unique MME Identifier (GUMMEI)) of the old mobility management node included in the TAU REQUEST. In Step S143, the old mobility management node 300A sends a CONTEXT RESPONSE message to the new mobility management node 300B in response to the CONTEXT REQUEST message. The CONTEXT RESPONSE message in Step S143 includes the RAN terminal information of the mobile terminal 200 in addition to an identifier (i.e., IMSI) of the mobile terminal 200, a bearer context (i.e., an EPS Bearer Context) and the like. In Step S144, the new mobility management node 300B sends a DOWNLINK NAS TRANSPORT message carrying a TAU ACCEPT to the base station 100. The DOWNLINK NAS TRANSPORT message in Step S144 further includes the RAN terminal information regarding the mobile terminal 200.

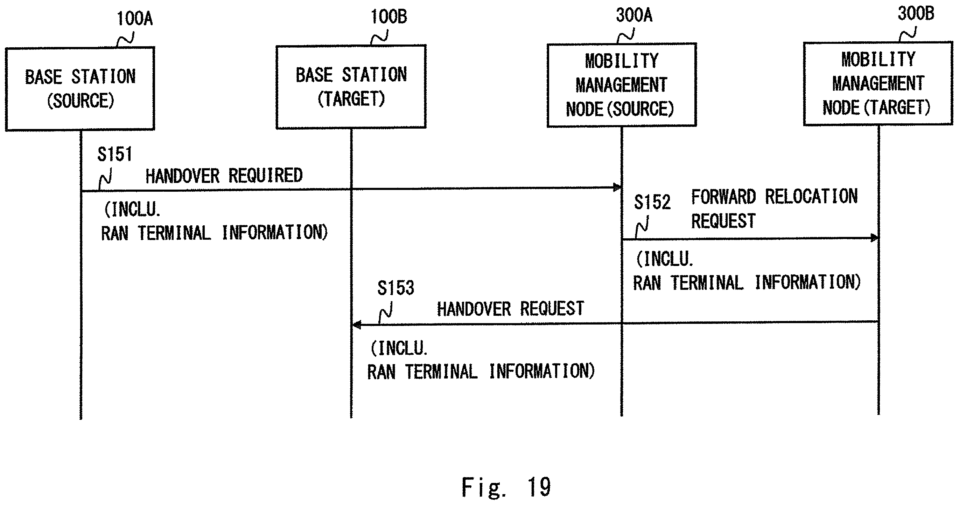

Further, the mobility management node 300 according to this embodiment may send the RAN terminal information to another mobility management node in response to an inter-cell movement (i.e., handover) of the mobile terminal 200 in the CONNECTED state. Specifically, the mobility management node 300 may send the RAN terminal information to another mobility management node in response to a handover of the mobile terminal 200 in the CONNECTED state to a cell (base station) belonging to another mobility management node. Fig. 19 shows a sequence diagram showing an example in which the RAN terminal information is sent between the mobility management nodes 300 in response to a handover (in this example, an Inter-MME handover) of the mobile terminal 200 in the CONNECTED state in the 3GPP EPS network. In Step S151, a source base station 100A determines to initiate a handover and sends a HANDOVER REQUIERD message to a source mobility management node 300A. In Step S152, the source mobility management node 300A sends a FORWARD RELOCATION REQUEST message to a target mobility management node 300B in response to the reception of the HANDOVER REQUIERD message. In Step S153, the target mobility management node 300B sends a HANDOVER REQUEST message to a target base station 100B in response to the reception of the FORWARD RELOCATION REQUEST message. In the example shown in Fig. 19, the HANDOVER REQUIERD message, the FORWARD RELOCATION REQUEST message, and the HANDOVER REQUEST message include RAN terminal information regarding the mobile terminal 200 which performs the handover.

The sequences regarding the transfer of the RAN terminal information between the mobility management nodes 300 shown in Figs. 18 and 19 are merely examples. For example, the mobile communication system according to this embodiment may be a UMTS network. In the case of the UMTS network, the control message shown in Step S131 in Fig. 17 may be an SGSN CONTEXT RESPONSE message sent from an old SGSN to a new SGSN when a Routing area update (RAU) is executed. Further, the control message shown in Step S131 in Fig. 17 may be a FORWARD RELOCATION REQUEST message sent from a source SGSN to a target SGSN when an Inter-SGSN handover is executed.

According to this embodiment, the RAN terminal information can be transferred between the mobility management nodes 300. Accordingly, in this embodiment, the RAN terminal information can be shared or re-used between the base stations 100 managed by different mobility management nodes.

### Fourth embodiment

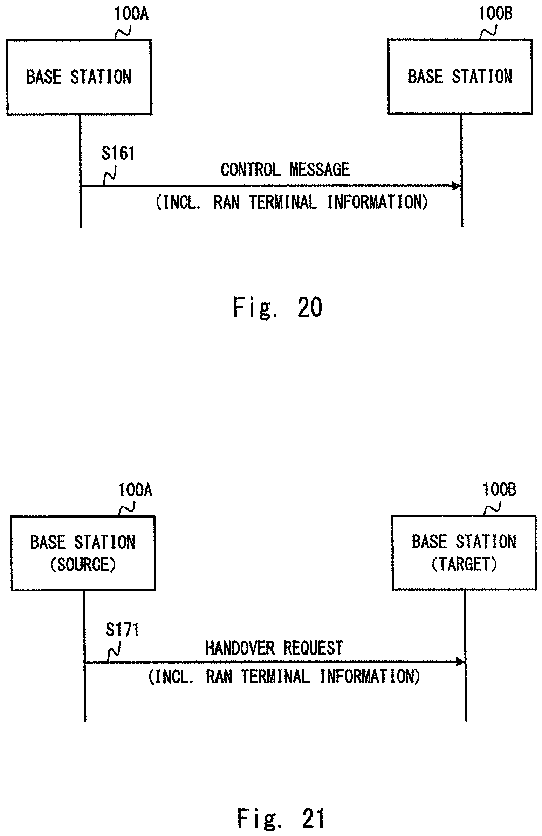

In this embodiment, an example in which the RAN terminal information is transferred between the base stations 100 will be described. The transfer of the RAN terminal information between the base stations 100 described in this embodiment may be performed in addition to the operations for saving the RAN terminal information in the MCN 30 and reading out the RAN terminal information from the MCN 30 described in the above first to third embodiments. A configuration example of a mobile communication system according to this embodiment may be similar to that in Fig. 1 according to the first embodiment. The RAN 20, however, includes at least two base stations 100. The base station 100 according to this embodiment is configured to send the RAN terminal information to another base station 100. Fig. 20 is a sequence diagram showing a method of sending the RAN terminal information between two base stations 100. In Step S161, a base station 100A sends a control message including the RAN terminal information (e.g., an X2 Application Protocol (X2AP) message) to a base station 100B.

The base station 100 according to this embodiment may send the RAN terminal information to another base station in response to an inter-cell movement (i.e., handover) of the mobile terminal 200 in the CONNECTED state. Specifically, the base station 100 may send the RAN terminal information to another base station in response to a handover of the mobile terminal 200 in the CONNECTED state to a cell belonging to another base station. Fig. 21 shows a sequence diagram showing an example in which the RAN terminal information is sent between the base stations 100 in response to a handover (in this example, an X2-based handover) of the mobile terminal 200 in the CONNECTED state in the 3GPP EPS network. In Step S171, the source base station 100A determines to initiate a handover and sends a HANDOVER REQUEST message to the target base station 100B. In the example shown in Fig. 21, the HANDOVER REQUEST message includes the RAN terminal information regarding the mobile terminal 200 which performs the handover.

The sequence regarding the transfer of the RAN terminal information between the base stations 100 shown in Fig. 21 is merely an example. For example, the mobile communication system according to this embodiment may be a UMTS network. In the case of the UMTS network, the control message shown in Step S161 in Fig. 20 may be a Radio network subsystem application Part (RNSAP) message transmitted and received between RNCs. For example, the control message shown in Step S161 in Fig. 20 may be a RADIO LINK SETUP REQUEST sent from the source RNC to the target RNC when an Inter-RNC handover is executed.

According to this embodiment, the RAN terminal information can be transferred between the base stations 100. Accordingly, in this embodiment, the RAN terminal information acquired in any base station 100 can be directly transmitted to another base station 100 without passing through the MCN 30, and the RAN terminal information can be shared or reused between the base stations 100.

### Other embodiments

The first to fourth embodiments stated above may be appropriately combined.

Further, in the above first to fourth embodiments, a number of examples in which the base station 100 saves the RAN terminal information in the MCN 30 and reads out the RAN terminal information from the MCN 30 have been described. However, the operations for saving and reading out the RAN terminal information may be performed by a node in the RAN 20 other than the base station 100. Further, in the first to fourth embodiments, examples in which the management entity of the RAN terminal information in the MCN 30 is the mobility management node 300 or the subscriber server 320 have been shown. However, the management of the RAN terminal information in the MCN 30 may be performed by a node in the MCN 30 other than the mobility management node 300 or the subscriber server 320.

Further, in the above first to fourth embodiments, the specific example regarding the EPS has been mainly described. However, the mobile communication system according to the first to fourth embodiments may be another mobile communication system including a GPRS system. In the case of the GPRS system, a TAU REQUEST may be replaced by a RAU REQUEST, an S1AP message may be replaced by a Radio Access Network Application Part (RANAP) message, and a GUMMEI may be replaced by a Packet Temporary Mobile Subscriber Identity (P-TMSI).

Further, in the aforementioned operations, the RAN terminal information may be used even after the movement of the mobile terminal 200 across different access systems (e.g., a movement of the mobile terminal 200 from the UTRAN to the E-UTRAN). For example, the base station 100 or an RNC of the UTRAN may save the RAN terminal information acquired by the UTRAN in the MCN 30 (in this example, a GPRS packet core and an EPC). The base station 100 of the E-UTRAN may read out from the MCN 30 the RAN terminal information acquired by the UTRAN and use it.

Further, the above embodiments are merely examples regarding application of technical ideas obtained by the present inventors. The technical ideas are not limited to the embodiments stated above and may be changed in various ways.

This application is based upon and claims the benefit of priority from Japanese Patent Application No. 2012-222011, filed on October 4, 2012.

### Reference Signs List

- 20: RADIO ACCESS NETWORK (RAN)
- 30: MOBILE CORE NETWORK (MCN)
- 40: EXTERNAL NETWORK
- 100: BASE STATION
- 101: RADIO COMMUNICATION UNIT
- 102: TERMINAL INFORMATION ACQUISITION UNIT
- 103: TERMINAL INFORMATION MANAGEMENT UNIT
- 104: CONFIGURATION UNIT
- 105: UE INACTIVITY TIMER
- 200: MOBILE TERMINAL
- 300: MOBILITY MANAGEMENT NODE
- 301: CONTROL UNIT
- 302: TERMINAL INFORMATION STORAGE UNIT
- 310: TRANSFER NODE
- 320: SUBSCRIBER SERVER

## Claims

1. A radio access network apparatus (100) arranged in a radio access network (20), the radio access network apparatus (100) being a base station (100) and comprising:
information management means (103) for sending, to a core network (30), RAN terminal information regarding a mobile terminal (200) in response to a state transition of the mobile terminal (200) from a CONNECTED state to an IDLE state in which the RAN terminal information regarding the mobile terminal (200) is deleted from the radio access network (20), for receiving the RAN terminal information from the core network (30) in response to a state transition of the mobile terminal (200) from the IDLE state to the CONNECTED state in which the RAN terminal information regarding the mobile terminal (200) is retained and used in the radio access network (20), and for sending the RAN terminal information to a target base station when an outgoing handover of the mobile terminal (200) in the CONNECTED state is performed from the radio access network apparatus (100) to the target base station,
wherein the RAN terminal information includes at least one of: measurement information regarding the mobile terminal (200) acquired in the radio access network (20); history information regarding the mobile terminal (200) acquired in the radio access network (20); and configuration information regarding the mobile terminal (200) determined in the radio access network (20).

2. The radio access network apparatus (100) according to Claim 1, wherein the information management means (103) is adapted to send the RAN terminal information to the core network (30) in response to cessation of acquisition of the RAN terminal information by the radio access network apparatus (100) due to the state transition of the mobile terminal (200) to the IDLE state.

3. The radio access network apparatus (100) according to Claim 1 or 2, wherein the information management means (103) is adapted to send the RAN terminal information to the core network (30) in response to a location update of the mobile terminal (200).

4. The radio access network apparatus (100) according to any one of Claims 1 to 3, wherein the information management means (103) is adapted to send the RAN terminal information to the core network (30) in response to an outgoing handover of the mobile terminal (200).

5. The radio access network apparatus (100) according to any one of Claims 1 to 4, wherein the information management means (103) is adapted to receive the RAN terminal information from the core network (30) in response to initiation of acquisition of the RAN terminal information by the radio access network apparatus (100) due to the state transition of the mobile terminal (200) to the CONNECTED state.

6. The radio access network apparatus (100) according to any one of Claims 1 to 5, wherein the information management means (103) is adapted to receive the RAN terminal information from the core network (30) in response to an incoming handover of the mobile terminal (200).

7. The radio access network apparatus (100) according to any one of Claims 1 to 6, wherein the RAN terminal information includes at least one of a history of communication of the mobile terminal (200), a history of movement of the mobile terminal (200), and a history of services used by the mobile terminal (200).

8. The radio access network apparatus (100) according to any one of Claims 1 to 7, wherein the RAN terminal information includes information used in the radio access network apparatus (100) to perform a setting regarding the mobile terminal (200).

9. The radio access network apparatus (100) according to any one of Claims 1 to 8, wherein the RAN terminal information includes information used to determine an expiration period of a timer (105) which is arranged in the radio access network apparatus (100) to control the state transition of the mobile terminal (200) from the CONNECTED state to the IDLE state.

10. The radio access network apparatus (100) according to any one of Claims 1 to 9, wherein the RAN terminal information includes configuration information regarding an expiration period of a timer (105) which is arranged in the radio access network apparatus (100) to control the state transition of the mobile terminal (200) from the CONNECTED state to the IDLE state.

11. The radio access network apparatus (100) according to any one of Claims 1 to 10, further comprising setting means (104) for performing a setting regarding the mobile terminal (200) based on the RAN terminal information.

12. The radio access network apparatus (100) according to Claim 11, wherein the setting means (104) is adapted to set, based on the RAN terminal information, an expiration period of a timer (105) to control the state transition of the mobile terminal (200) from the CONNECTED state to the IDLE state.

13. The radio access network apparatus (100) according to any one of Claims 1 to 12, further comprising information acquisition means (102) for autonomously acquiring the RAN terminal information.

14. The radio access network apparatus (100) according to any one of Claims 1 to 13, wherein the information management means (103) is further adapted to receive the RAN terminal information from a source base station when an incoming handover of the mobile terminal (200) is performed from the source base station to the radio access network apparatus (100).

15. The radio access network apparatus (100) according to any one of Claims 1 to 14, wherein the information management means (103) is adapted to send the RAN terminal information to the core network (30) to save the RAN terminal information and is adapted to receive the RAN terminal information from the core network (30) to read out the RAN terminal information.

16. A core network apparatus (300) arranged in a core network (30), the core network apparatus (300) comprising:
control means (301) for receiving, from a first base station (100) included in a radio access network (20), RAN terminal information regarding a mobile terminal (200) in response to a state transition of the mobile terminal (200) from a CONNECTED state to an IDLE state in which the RAN terminal information regarding the mobile terminal (200) is deleted from the radio access network (20), and for sending the RAN terminal information to a second base station that is included in the radio access network (20) and is different from the first base station (100) in response to a movement of the mobile terminal (200) in the IDLE state from the first base station (100) to the second base station and in response to a state transition of the mobile terminal (200) from the IDLE state to the CONNECTED state in which the RAN terminal information regarding the mobile terminal (200) is retained and used in the radio access network (20),
wherein the RAN terminal information includes at least one of: measurement information regarding the mobile terminal (200) acquired in the radio access network (20); history information regarding the mobile terminal (200) acquired in the radio access network (20); and configuration information regarding the mobile terminal (200) determined in the radio access network (20).

17. The core network apparatus (300) according to Claim 16, wherein the control means (301) is further adapted to send the RAN terminal information to another core network apparatus (300B) due to an inter-cell movement of the mobile terminal (200).

18. A method performed by a radio access network apparatus (100) arranged in a radio access network (20), the radio access network apparatus being a base station (100) and the method comprising:
sending, to a core network (30), RAN terminal information regarding a mobile terminal (200) in response to a state transition of the mobile terminal (200) from a CONNECTED state to an IDLE state in which the RAN terminal information regarding the mobile terminal (200) is deleted from the radio access network (20);
receiving the RAN terminal information from the core network (30) in response to a state transition of the mobile terminal (200) from the IDLE state to the CONNECTED state in which the RAN terminal information regarding the mobile terminal (200) is retained and used in the radio access network (20); and
sending the RAN terminal information to a target base station when an outgoing handover of the mobile terminal (200) in the CONNECTED state is performed from the radio access network apparatus (100) to the target base station,
wherein the RAN terminal information includes at least one of: measurement information regarding the mobile terminal (200) acquired in the radio access network (20); history information regarding the mobile terminal (200) acquired in the radio access network (20); and configuration information regarding the mobile terminal (200) determined in the radio access network (20).

19. A method performed by a core network apparatus (300) arranged in a core network (30), the method comprising:
receiving, from a first base station (100) included in a radio access network (20), RAN terminal information regarding a mobile terminal (200) in response to a state transition of the mobile terminal (200) from a CONNECTED state to an IDLE state in which the RAN terminal information regarding the mobile terminal (200) is deleted from the radio access network (20); and
sending the RAN terminal information to a second base station that is included in the radio access network (20) and is different from the first base station (100) in response to a movement of the mobile terminal (200) in the IDLE state from the first base station (100) to the second base station and in response to a state transition of the mobile terminal (200) from the IDLE state to the CONNECTED state in which the RAN terminal information regarding the mobile terminal (200) is retained and used in the radio access network (20),
wherein the RAN terminal information includes at least one of: measurement information regarding the mobile terminal (200) acquired in the radio access network (20); history information regarding the mobile terminal (200) acquired in the radio access network (20); and configuration information regarding the mobile terminal (200) determined in the radio access network (20).

## Patentansprüche

1. Funkzugangsnetzwerkvorrichtung (100), die in einem Funkzugangsnetzwerk (20) angeordnet ist, wobei die Funkzugangsnetzwerkvorrichtung (100) eine Basisstation (100) ist und aufweist:
Informationsverwaltungsmittel (103) zum Senden an ein Kernnetzwerk (30) von RAN-Endgeräteinformationen, die ein mobiles Endgerät (200) betreffen, als Reaktion auf einen Zustandsübergang des mobilen Endgeräts (200) von einem VERBUNDEN-Zustand in einen LEERLAUF-Zustand, in dem die RAN-Endgeräteinformationen, die das mobile Endgerät (200) betreffen, aus dem Funkzugangsnetzwerk (20) gelöscht werden, zum Empfangen der RAN-Endgeräteinformationen vom Kernnetzwerk (30) als Reaktion auf einen Zustandsübergang des mobilen Endgeräts (200) vom LEERLAUF-Zustand in den VERBUNDEN-Zustand, in dem die RAN-Endgeräteinformationen, die das mobile Endgerät (200) betreffen, im Funkzugangsnetzwerk (20) aufbewahrt und verwendet werden, und zum Senden der RAN-Endgeräteinformationen an eine Zielbasisstation, wenn eine abgehende Übergabe des mobilen Endgeräts (200) im VERBUNDEN-Zustand von der Funkzugangsnetzwerkvorrichtung (100) zur Zielbasisstation durchgeführt wird,
wobei die RAN-Endgeräteinformationen aufweisen: Messinformationen, die das mobile Endgerät (200) betreffen, die im Funkzugangsnetzwerk (20) erfasst werden, und/oder Verlaufsinformationen, die das mobile Endgerät (200) betreffen, die im Funkzugangsnetzwerk (20) erfasst werden, und/oder Konfigurationsinformationen, die das mobile Endgerät (200) betreffen, die im Funkzugangsnetzwerk (20) bestimmt werden.

2. Funkzugangsnetzwerkvorrichtung (100) nach Anspruch 1, wobei das Informationsverwaltungsmittel (103) eingerichtet ist, die RAN-Endgeräteinformationen an das Kernnetzwerk (30) als Reaktion auf die Einstellung der Erfassung der RAN-Endgeräteinformationen durch die Funkzugangsnetzwerkvorrichtung (100) aufgrund des Zustandsübergangs des mobilen Endgeräts (200) in den LEERLAUF-Zustand zu senden.

3. Funkzugangsnetzwerkvorrichtung (100) nach Anspruch 1 oder 2, wobei das Informationsverwaltungsmittel (103) eingerichtet ist, die RAN-Endgeräteinformationen an das Kernnetzwerk (30) als Reaktion auf eine Standortaktualisierung des mobilen Endgeräts (200) zu senden.

4. Funkzugangsnetzwerkvorrichtung (100) nach einem der Ansprüche 1 bis 3, wobei das Informationsverwaltungsmittel (103) eingerichtet ist, die RAN-Endgeräteinformationen an das Kernnetzwerk (30) als Reaktion auf eine abgehende Übergabe des mobilen Endgeräts (200) zu senden.

5. Funkzugangsnetzwerkvorrichtung (100) nach einem der Ansprüche 1 bis 4, wobei das Informationsverwaltungsmittel (103) eingerichtet ist, die RAN-Endgeräteinformationen vom Kernnetzwerk (30) als Reaktion auf den Beginn der Erfassung der RAN-Endgeräteinformationen durch die Funkzugangsnetzwerkvorrichtung (100) aufgrund des Zustandsübergangs des mobilen Endgeräts (200) in den VERBUNDEN-Zustand zu empfangen.

6. Funkzugangsnetzwerkvorrichtung (100) nach einem der Ansprüche 1 bis 5, wobei das Informationsverwaltungsmittel (103) eingerichtet ist, die RAN-Endgeräteinformationen vom Kernnetzwerk (30) als Reaktion auf eine ankommende Übergabe des mobilen Endgeräts (200) zu empfangen.

7. Funkzugangsnetzwerkvorrichtung (100) nach einem der Ansprüche 1 bis 6, wobei die RAN-Endgeräteinformationen einen Kommunikationsverlauf des mobilen Endgeräts (200), und/oder einen Bewegungsverlauf des mobilen Endgeräts (200) und/oder einen Verlauf der durch das mobile Endgerät (200) verwendeten Dienste aufweisen.

8. Funkzugangsnetzwerkvorrichtung (100) nach einem der Ansprüche 1 bis 7, wobei die RAN-Endgeräteinformationen Informationen aufweisen, die in der Funkzugangsnetzwerkvorrichtung (100) verwendet werden, um eine Einstellung durchzuführen, die das mobile Endgerät (200) betrifft.

9. Funkzugangsnetzwerkvorrichtung (100) nach einem der Ansprüche 1 bis 8, wobei die RAN-Endgeräteinformationen Informationen aufweisen, die verwendet werden, eine Ablaufperiode eines Zeitgebers (105) zu bestimmen, der in der Funkzugangsnetzwerkvorrichtung (100) angeordnet ist, um den Zustandsübergang des mobilen Endgeräts (200) vom VERBUNDEN-Zustand in den LEERLAUF-Zustand zu steuern.

10. Funkzugangsnetzwerkvorrichtung (100) nach einem der Ansprüche 1 bis 9, wobei die RAN-Endgeräteinformationen Konfigurationsinformationen aufweisen, die eine Ablaufperiode eines Zeitgebers (105) betreffen, der in der Funkzugangsnetzwerkvorrichtung (100) angeordnet ist, um den Zustandsübergang des mobilen Endgeräts (200) vom VERBUNDEN-Zustand in den LEERLAUF-Zustand zu steuern.

11. Funkzugangsnetzwerkvorrichtung (100) nach einem der Ansprüche 1 bis 10, die ferner Einstellmittel (104) zum Durchführen einer Einstellung, die das mobile Endgerät (200) betrifft, beruhend auf den RAN-Endgeräteinformationen aufweist.

12. Funkzugangsnetzwerkvorrichtung (100) nach Anspruch 11, wobei das Einstellmittel (104) eingerichtet ist, beruhend auf den RAN-Endgeräteinformationen eine Ablaufperiode eines Zeitgebers (105) einzustellen, um den Zustandsübergang des mobilen Endgeräts (200) vom VERBUNDEN-Zustand in den LEERLAUF-Zustand zu steuern.

13. Funkzugangsnetzwerkvorrichtung (100) nach einem der Ansprüche 1 bis 12, die ferner Informationserfassungsmittel (102) zum autonomen Erfassen der RAN-Endgeräteinformationen aufweist.

14. Funkzugangsnetzwerkvorrichtung (100) nach einem der Ansprüche 1 bis 13, wobei das Informationsverwaltungsmittel (103) ferner eingerichtet ist, die RAN-Endgeräteinformationen von einer Ausgangsbasisstation zu empfangen, wenn eine ankommende Übergabe des mobilen Endgeräts (200) von der Ausgangsbasisstation an die Funkzugangsnetzwerkvorrichtung (100) durchgeführt wird.

15. Funkzugangsnetzwerkvorrichtung (100) nach einem der Ansprüche 1 bis 14, wobei das Informationsverwaltungsmittel (103) eingerichtet ist, die RAN-Endgeräteinformationen an das Kernnetzwerk (30) zu senden, um die RAN-Endgeräteinformationen zu speichern, und eingerichtet ist, die RAN-Endgeräteinformationen vom Kernnetzwerk (30) zu empfangen, um die RAN-Endgeräteinformationen auszulesen.

16. Kernnetzwerkvorrichtung (300), die in einem Kernnetzwerk (30) angeordnet ist, wobei die Kernnetzwerkvorrichtung (300) aufweist:
Steuermittel (301) zum Empfangen von einer ersten Basisstation (100), die in einem Funkzugangsnetzwerk (20) enthalten ist, von RAN-Endgeräteinformationen, die ein mobiles Endgerät (200) betreffen, als Reaktion auf einen Zustandsübergang des mobilen Endgeräts (200) von einem VERBUNDEN-Zustand in einen LEERLAUF-Zustand, in dem die RAN-Endgeräteinformationen, die das mobile Endgerät (200) betreffen, aus dem Funkzugangsnetzwerk (20) gelöscht werden, und zum Senden der RAN-Endgeräteinformationen an eine zweite Basisstation, die im Funkzugangsnetzwerk (20) enthalten ist und sich von der ersten Basisstation (100) unterscheidet, als Reaktion auf eine Bewegung des mobilen Endgeräts (200) im LEERLAUF-Zustand von der ersten Basisstation (100) zur zweiten Basisstation und als Reaktion auf einen Zustandsübergang des mobilen Endgeräts (200) vom LEERLAUF-Zustand in den VERBUNDEN-Zustand, in dem die RAN-Endgeräteinformationen, die das mobile Endgerät (200) betreffen, im Funkzugangsnetzwerk (20) aufbewahrt und verwendet werden,
wobei die RAN-Endgeräteinformationen aufweisen: Messinformationen, die das mobile Endgerät (200) betreffen, die im Funkzugangsnetzwerk (20) erfasst werden, und/oder Verlaufsinformationen, die das mobile Endgerät (200) betreffen, die im Funkzugangsnetzwerk (20) erfasst werden, und/oder Konfigurationsinformationen, die das mobile Endgerät (200) betreffen, die im Funkzugangsnetzwerk (20) bestimmt werden.

17. Kernnetzwerkvorrichtung (300) nach Anspruch 16, wobei das Steuermittel (301) ferner eingerichtet ist, die RAN-Endgeräteinformationen zu einer anderen Kernnetzwerkvorrichtung (300B) aufgrund einer Bewegung zwischen Zellen des mobilen Endgeräts (200) zu senden.

18. Verfahren, das durch eine Funkzugangsnetzwerkvorrichtung (100) ausgeführt wird, die in einem Funkzugangsnetzwerk (20) angeordnet ist, wobei die Funkzugangsnetzwerkvorrichtung eine Basisstation (100) ist und wobei das Verfahren aufweist:
Senden an ein Kernnetzwerk (30) von RAN-Endgeräteinformationen, die ein mobiles Endgerät (200) betreffen, als Reaktion auf einen Zustandsübergang des mobilen Endgeräts (200) von einem VERBUNDEN-Zustand in einen LEERLAUF-Zustand, in dem die RAN-Endgeräteinformationen, die das mobile Endgerät (200) betreffen, aus dem Funkzugangsnetzwerk (20) gelöscht werden;
Empfangen der RAN-Endgeräteinformationen vom Kernnetzwerk (30) als Reaktion auf einen Zustandsübergang des mobilen Endgeräts (200) vom LEERLAUF-Zustand in den VERBUNDEN-Zustand, in dem die RAN-Endgeräteinformationen, die das mobile Endgerät (200) betreffen, im Funkzugangsnetzwerk (20) aufbewahrt und verwendet werden, und
Senden der RAN-Endgeräteinformationen an eine Zielbasisstation, wenn eine abgehende Übergabe des mobilen Endgeräts (200) im VERBUNDEN-Zustand von der Funkzugangsnetzwerkvorrichtung (100) zur Zielbasisstation durchgeführt wird,
wobei die RAN-Endgeräteinformationen aufweisen: Messinformationen, die das mobile Endgerät (200) betreffen, die im Funkzugangsnetzwerk (20) erfasst werden, und/oder Verlaufsinformationen, die das mobile Endgerät (200) betreffen, die im Funkzugangsnetzwerk (20) erfasst werden, und/oder Konfigurationsinformationen, die das mobile Endgerät (200) betreffen, die im Funkzugangsnetzwerk (20) bestimmt werden.

19. Verfahren, das durch eine Kemnetzwerkvorrichtung (300) ausgeführt wird, die in einem Kernnetzwerk (30) angeordnet ist, wobei das Verfahren aufweist:
Empfangen von einer ersten Basisstation (100), die in einem Funkzugangsnetzwerk (20) enthalten ist, von RAN-Endgeräteinformationen, die ein mobiles Endgerät (200) betreffen, als Reaktion auf einen Zustandsübergang des mobilen Endgeräts (200) von einem VERBUNDEN-Zustand in einen LEERLAUF-Zustand, in dem die RAN-Endgeräteinformationen, die das mobile Endgerät (200) betreffen, aus dem Funkzugangsnetzwerk (20) gelöscht werden, und
Senden der RAN-Endgeräteinformationen an eine zweite Basisstation, die im Funkzugangsnetzwerk (20) enthalten ist und sich von der ersten Basisstation (100) unterscheidet, als Reaktion auf eine Bewegung des mobilen Endgeräts (200) im LEERLAUF-Zustand von der ersten Basisstation (100) zur zweiten Basisstation und als Reaktion auf einen Zustandsübergang des mobilen Endgeräts (200) vom LEERLAUF-Zustand in den VERBUNDEN-Zustand, in dem die RAN-Endgeräteinformationen, die das mobile Endgerät (200) betreffen, im Funkzugangsnetzwerk (20) aufbewahrt und verwendet werden,
wobei die RAN-Endgeräteinformationen aufweisen: Messinformationen, die das mobile Endgerät (200) betreffen, die im Funkzugangsnetzwerk (20) erfasst werden, und/oder Verlaufsinformationen, die das mobile Endgerät (200) betreffen, die im Funkzugangsnetzwerk (20) erfasst werden, und/oder Konfigurationsinformationen, die das mobile Endgerät (200) betreffen, die im Funkzugangsnetzwerk (20) bestimmt werden.

## Revendications

1. Appareil de réseau d'accès radio (100) disposé dans un réseau d'accès radio (20), ledit appareil de réseau d'accès radio (100) étant une station de base (100) et comprenant :
une unité de gestion d'informations (103) destinée à transmettre à un réseau central (30) des informations de terminal RAN relatives à un terminal mobile (200) en réaction à une transition d'état du terminal mobile (200) d'un état CONNECTE à un état VEILLE où les informations de terminal RAN relatives au terminal mobile (200) sont supprimées du réseau d'accès radio (20), à recevoir les informations de terminal RAN du réseau central (30) en réaction à une transition d'état du terminal mobile (200) de l'état VEILLE à l'état CONNECTE où les informations de terminal RAN relatives au terminal mobile (200) sont maintenues et exploitées dans le réseau d'accès radio (20), et à adresser les informations de terminal RAN à une station de base cible si un transfert sortant du terminal mobile (200) en état CONNECTE est exécuté de l'appareil de réseau d'accès radio (100) vers la station de base cible,
où les informations de terminal RAN comprennent : des informations de mesure relatives au terminal mobile (200) acquises dans le réseau d'accès radio (20) et/ou des informations d'historique relatives au terminal mobile (200) acquises dans le réseau d'accès radio (20) et/ou des informations de configuration relatives au terminal mobile (200) déterminées dans le réseau d'accès radio (20).

2. Appareil de réseau d'accès radio (100) selon la revendication 1, où l'unité de gestion d'informations (103) est prévue pour adresser les informations de terminal RAN au réseau central (30) en réaction à un arrêt d'acquisition des informations de terminal RAN par l'appareil de réseau d'accès radio (100) en raison de la transition d'état du terminal mobile (200) vers l'état VEILLE.

3. Appareil de réseau d'accès radio (100) selon la revendication 1 ou la revendication 2, où l'unité de gestion d'informations (103) est prévue pour adresser les informations de terminal RAN au réseau central (30) en réaction à une mise à jour de localisation du terminal mobile (200).

4. Appareil de réseau d'accès radio (100) selon l'une des revendications 1 à 3, où l'unité de gestion d'informations (103) est prévue pour adresser les informations de terminal RAN au réseau central (30) en réaction à un transfert sortant du terminal mobile (200).

5. Appareil de réseau d'accès radio (100) selon l'une des revendications 1 à 4, où l'unité de gestion d'informations (103) est prévue pour recevoir les informations de terminal RAN du réseau central (30) en réaction à l'initialisation de l'acquisition des informations de terminal RAN par l'appareil de réseau d'accès radio (100) en raison de la transition d'état du terminal mobile (200) vers l'état CONNECTE.

6. Appareil de réseau d'accès radio (100) selon l'une des revendications 1 à 5, où l'unité de gestion d'informations (103) est prévue pour recevoir les informations de terminal RAN du réseau central (30) en réaction à un transfert entrant du terminal mobile (200).

7. Appareil de réseau d'accès radio (100) selon l'une des revendications 1 à 6, où les informations de terminal RAN comprennent un historique de communication du terminal mobile (200) et/ou un historique de déplacement du terminal mobile (200) et/ou un historique de services utilisés par le terminal mobile (200).

8. Appareil de réseau d'accès radio (100) selon l'une des revendications 1 à 7, où les informations de terminal RAN comprennent des informations exploitées dans l'appareil de réseau d'accès radio (100) pour exécuter un paramétrage relatif au terminal mobile (200).

9. Appareil de réseau d'accès radio (100) selon l'une des revendications 1 à 8, où les informations de terminal RAN comprennent des informations exploitées pour déterminer une période d'expiration d'une horloge (105) disposée dans l'appareil de réseau d'accès radio (100) pour commander la transition d'état du terminal mobile (200) de l'état CONNECTE à l'état VEILLE.

10. Appareil de réseau d'accès radio (100) selon l'une des revendications 1 à 9, où les informations de terminal RAN comprennent des informations de configuration relatives à une période d'expiration d'une horloge (105) dans l'appareil de réseau d'accès radio (100) pour commander la transition d'état du terminal mobile (200) de l'état CONNECTE à l'état VEILLE.

11. Appareil de réseau d'accès radio (100) selon l'une des revendications 1 à 10, comprenant en outre une unité de paramétrage (104) destinée à exécuter un paramétrage relatif au terminal mobile (200) sur la base des informations de terminal RAN.

12. Appareil de réseau d'accès radio (100) selon la revendication 11, où l'unité de paramétrage (104) est prévue pour régler sur la base des informations de terminal RAN une période d'expiration d'une horloge (105) afin de commander la transition d'état du terminal mobile (200) de l'état CONNECTE à l'état VEILLE.

13. Appareil de réseau d'accès radio (100) selon l'une des revendications 1 à 12, comprenant en outre une unité d'acquisition d'informations (102) pour l'acquisition autonome des informations de terminal RAN.

14. Appareil de réseau d'accès radio (100) selon l'une des revendications 1 à 13, où l'unité de gestion d'informations (103) est en outre prévue pour recevoir les informations de terminal RAN d'une station de base source si un transfert entrant du terminal mobile (200) est effectué de la station de base source vers l'appareil de réseau d'accès radio (100).

15. Appareil de réseau d'accès radio (100) selon l'une des revendications 1 à 14, où l'unité de gestion d'informations (103) est prévue pour adresser les informations de terminal RAN au réseau central (30) pour sauvegarder les informations de terminal RAN et est prévue pour recevoir les informations de terminal RAN du réseau central (30) pour extraire les informations de terminal RAN.

16. Appareil de réseau central (300) disposé dans un réseau central (30), ledit appareil de réseau central (300) comprenant :
une unité de commande (301) destinée à recevoir d'une première station de base (100) comprise dans un réseau d'accès radio (20) des informations de terminal RAN relatives à un terminal mobile (200), en réaction à une transition d'état du terminal mobile (200) d'un état CONNECTE à un état VEILLE où les informations de terminal RAN relatives au terminal mobile (200) sont supprimées du réseau d'accès radio (20), et à adresser les informations de terminal RAN à une deuxième station de base comprise dans le réseau d'accès radio (20) et différente de la première station de base (100) en réaction à un déplacement du terminal mobile (200) en état VEILLE de la première station de base (100) vers la deuxième station de base et en réaction à une transition d'état du terminal mobile (200) de l'état VEILLE à l'état CONNECTE où les informations de terminal RAN relatives au terminal mobile (200) sont maintenues et exploitées dans le réseau d'accès radio (20),
où les informations de terminal RAN comprenant : des informations de mesure relatives au terminal mobile (200) acquises dans le réseau d'accès radio (20) et/ou des informations d'historique relatives au terminal mobile (200) acquises dans le réseau d'accès radio (20) et/ou des informations de configuration relatives au terminal mobile (200) déterminées dans le réseau d'accès radio (20).

17. Appareil de réseau central (300) selon la revendication 16, où l'unité de commande (301) est en outre prévue pour adresser les informations de terminal RAN à une autre appareil de réseau central (300B) suite à un déplacement intercellulaire du terminal mobile (200).

18. Procédé exécuté par l'appareil de réseau d'accès radio (100) disposé dans un réseau d'accès radio (20), ledit appareil de réseau d'accès radio étant une station de base (100) et ledit procédé comprenant :
la transmission à un réseau central (30) d'informations de terminal RAN relatives à un terminal mobile (200) en réaction à une transition d'état du terminal mobile (200) d'un état CONNECTE à un état VEILLE où les informations de terminal RAN relatives au terminal mobile (200) sont supprimées du réseau d'accès radio (20) ;
la réception des informations de terminal RAN du réseau central (30) en réaction à une transition d'état du terminal mobile (200) de l'état VEILLE à l'état CONNECTE où les informations de terminal RAN relatives au terminal mobile (200) sont maintenues et exploitées dans le réseau d'accès radio (20) ; et
la transmission des informations de terminal RAN à une station de base cible si un transfert sortant du terminal mobile (200) dans l'état CONNECTE est exécuté de l'appareil de réseau d'accès radio (100) vers la station de base cible,
les informations de terminal RAN comprenant des informations de mesure relatives au terminal mobile (200) acquises dans le réseau d'accès radio (20) et/ou des informations d'historique relatives au terminal mobile (200) acquises dans le réseau d'accès radio (20) et/ou des informations de configuration relatives au terminal mobile (200) déterminées dans le réseau d'accès radio (20).

19. Procédé exécuté par l'appareil de réseau central (300) disposé dans un réseau central (30), procédé comprenant :
la réception d'une première station de base (100) comprise dans un réseau d'accès radio (20), d'informations de terminal RAN relatives à un terminal mobile (200) en réaction à une transition d'état du terminal mobile (200) d'un état CONNECTE à un état VEILLE où les informations de terminal RAN relatives au terminal mobile (200) sont supprimées du réseau d'accès radio (20) ; et
la transmission des informations de terminal RAN à une deuxième station de base comprise dans le réseau d'accès radio (20) et différente de la première station de base (100) en réaction à un déplacement du terminal mobile (200) dans l'état VEILLE de la première station de base (100) vers la deuxième station de base et en réaction à une transition d'état du terminal mobile (200) de l'état VEILLE à l'état CONNECTE où les informations de terminal RAN relatives au terminal mobile (200) sont maintenues et exploitées dans le réseau d'accès radio (20),
les informations de terminal RAN comprenant des informations de mesure relatives au terminal mobile (200) acquises dans le réseau d'accès radio (20) et/ou des informations d'historique relatives au terminal mobile (200) acquises dans le réseau d'accès radio (20) et/ou des informations de configuration relatives au terminal mobile (200) déterminées dans le réseau d'accès radio (20).
